(19) Europäisches Patentamt

European Patent Office

Office européen des brevets

(11) EP 1 185 568 B1

(12) EUROPÄISCHE PATENTSCHRIFT

(45) Veröffentlichungstag und Bekanntmachung des Hinweises auf die Patenterteilung:
04.12.2002 Patentblatt 2002/49

(51) Int Cl.⁷: **C08F 285/00**, C09D 151/00, C09D 17/00

(21) Anmeldenummer: 00938502.2

(22) Anmeldetag: 20.04.2000

(86) Internationale Anmeldenummer:
PCT/DE00/01259

(87) Internationale Veröffentlichungsnummer:
WO 00/063265 (26.10.2000 Gazette 2000/43)

(54) **POLYMER**

POLYMER

POLYMERE

(84) Benannte Vertragsstaaten:
**AT BE CH CY DE DK ES FI FR GB GR IE IT LI LU MC NL PT SE**
Benannte Erstreckungsstaaten:
**SI**

(30) Priorität: **21.04.1999 DE 19918133**
**21.04.1999 DE 19918137**
**21.04.1999 DE 19918136**

(43) Veröffentlichungstag der Anmeldung:
**13.03.2002 Patentblatt 2002/11**

(73) Patentinhaber: **PPG Industries Lacke GmbH**
**42329 Wuppertal (DE)**

(72) Erfinder:
• **MÜLLER, Horst**
**D-51069 Köln (DE)**
• **HILLE, Hans-Dieter**
**D-51476 Bergisch Gladbach (DE)**

(74) Vertreter: **Brandenburg, Thomas, Dr.**
**Brandenburg, Dunkelberg & Franke**
**Lindenstrasse 1**
**53773 Hennef (DE)**

(56) Entgegenhaltungen:
EP-A- 0 947 557    US-A- 4 777 207
US-A- 4 927 875    US-A- 5 786 420

## Beschreibung

Die vorliegende Erfindung betrifft Polymere sowie deren Verwendung, insbesondere auf dem Gebiet der Automobilserienlackierung.

Eine konventionelle Autolackschicht nach dem sogenannten "Basislack/Klarlackverfahren" mit ausreichender Steinschlagfestigkeit und gutem UV-Schutz besteht im allgemeinen aus insgesamt vier voneinander unterschiedlichen Schichten (Vierschichtaufbau). Diese vier Schichten werden nacheinander in getrennten Lackieranlagen aufgetragen. Die erste, direkt auf dem Autoblech befindliche Schicht ist eine elektrophoretisch aufgetragene Schicht (Electrocoatschicht, KTL-Schicht), die durch Elektrotauchlackierung - hauptsächlich kathodische Tauchlackierung (KTL) - zwecks Korrosionsschutz aufgebracht und anschließend eingebrannt wird.

Die zweite, auf der Elektrocoatschicht befindliche und etwa 30 bis 40 μm dicke Schicht ist eine sogenannte Füllerschicht, die einerseits Schutz gegen mechanische Angriffe (Steinschlagschutzfunktion) bietet, andererseits die rauhe Oberfläche der Rohkarosserie für die nachfolgende Decklackierung glättet, kleinere Unebenheiten ausfüllt und die elektrophoretisch abgeschiedene Schicht (KTL-Schicht) vor der natürlichen UV-Strahlung schützt. Diese Schicht wird größtenteils durch Applikation eines Einbrennlackes, mit elektrostatischen Hochrotationsglocken und anschließendem Einbrennvorgang bei Temperaturen über 130 °C erzeugt.

Die dritte, auf der Füllerschicht befindliche Schicht ist die Basislackschicht, die durch entsprechende Pigmente der Karosserie die gewünschte Farbe gibt. Der Basislack wird im herkömmlichen Spritzverfahren aufgetragen. Die Schichtdicke dieser herkömmlichen Basislackschicht liegt je nach Farbton zwischen etwa 12 bis 25 μm. Meistens wird diese Schicht, besonders bei Metallic-Effektlacken, in zwei Verfahrensschritten aufgebracht. In einem ersten Schritt erfolgt die Auftragung mittels elektrostatischer Hochrotationsglocken, gefolgt von einem zweiten Auftrag mittels pneumatischer Zerstäubung. Diese Schicht wird (bei Verwendung von wäßrigem Basislack) mit Infrarotstrahlern und/oder durch Warmluftkonvektion zwischengetrocknet.

Die vierte und oberste, auf der Basislackschicht befindliche Schicht ist die Klarlackschicht, die meistens in einem Auftrag durch elektrostatische Hochrotationsglocken aufgetragen wird. Sie verleiht der Karosserie den gewünschten Glanz und schützt den Basislack vor Umwelteinflüssen (UV-Strahlung, Salzwasser, etc.).

Anschließend werden die Basislackschicht und die Klarlackschicht gemeinsam eingebrannt.

Im Hinblick auf den Umweltschutz werden immer mehr Automobilserienlacke auf Wasserbasis verwendet. Wäßrige Automobilserienlacke sind bestens eingeführt und aus der industriellen Anwendung nicht mehr wegzudenken, nicht nur aus Gründen des Umweltschutzes. Wäßrige Lacksysteme sind inzwischen nicht mehr nur das notwendige Übel, sondern stellen technologisch und vom Potential der Möglichkeiten eine ernst zu nehmende Alternative dar. Gleichwohl sind die Anforderungen in den letzten Jahren erheblich angestiegen. Die Notwendigkeit zur Steigerung der Produktivität bei gleichzeitiger weiterer Erniedrigung der Emissionswerte stellt neue Anforderungen an wäßrige Basislacksysteme. Insbesondere zu nennen ist die Verträglichkeit mit emissionsarmen Klarlacken (Pulver, Wasserklarlack, Pulverslurry) und die wegen kürzerer Verarbeitungszyklen notwendige Steigerung der Applikationssicherheit. So ist es z.B. sehr schwierig, mit einem Wasserbasislack des Standes der Technik, zusammen mit einem Pulverklarlack, die geforderten Haftungseigenschaften zu erreichen.

Insbesondere die Verträglichkeit mit Klarlacken auf Basis von Pulverslurry stellen besonders hohe Anforderungen an wäßrige Basislacke. Unter dem Begriff Pulverslurry wird eine Suspension aus Lackteilchen und Wasser verstanden, die üblicherweise aus 60 bis 70 Gew.-% Wasser und 30 bis 40 Gew.-% Festkörper besteht. Solche Zusammensetzungen sind beispielsweise aus der DE 196 13 547 C2 und DE 196 18 657 A1 bekannt. Die Verwendung einer solchen Pulverslurry zeichnet sich durch eine besonders einfache Applikation der entsprechenden Lacke aus. So kann ein solcher Lack mit einer herkömmlichen Lackieranlage für Naßlacke aufgetragen werden; d.h. daß auf den Einsatz von speziell abgetrennten Lackiervorrichtungen, wie sie für die Lackierung mit Pulverlacken notwendig sind, verzichtet werden kann. Ein unerwünschter Effekt, der bei der Verwendung herkömmlicher Basislacke auf Wasserbasis unter einer Klarlackschicht aus Pulverslurry beobachtet wird, ist das sogenannte "mud-cracking". Mit dieser Bezeichnung wird ein Oberflächenzustand der ausgehärteten Lackoberfläche beschrieben, der auf ein Reißen der Lackschichten zurückzuführen ist und mit dem Aussehen eines ausgetrockneten Wüstenbodens vergleichbar ist.

Des weiteren ist bei einem wäßrigen Metallicbasislack die sogenannte "Gasungsstabilität" besonders wichtig. Der Ausdruck "Gasungsstabilität" bezeichnet die Eigenschaft eines ungeschützte Aluminiumteilchen enthaltenden Metallic-Effektlackes, bei dem die Aluminiumteilchen nicht mit dem Lösemittel Wasser unter Bildung von Wasserstoff reagieren.

Eine Möglichkeit der Beeinflussung dieser Eigenschaft ist die Verwendung von speziellen, besonders behandelten Aluminiumbronzen (EP-0 321 470). Solche Aluminiumbronzen sind teurer, weniger brillant und können unerwünschte Eigenschaften in das System einbringen, wie z.B. eine erhöhte Neigung zur Agglomeratbildung.

Eine andere Möglichkeit die Gasung zu verhindern ist der Zusatz entsprechender Additive (EP-0 206 615 B1 und EP-0 238 222 B1). In vielen Fällen handelt es sich um Additive, die neben ihren erwünschten Wirkungen auch negative Eigenschaften in das System einbringen können.

Aufgrund des gesteigerten Anforderungsprofils an einen in der Automobilindustrie verwendbaren wäßrigen Basislack kommt den rheologischen Eigenschaften eines solchen eine erhöhte Bedeutung zu.

Unter dem Begriff "rheologische Eigenschaften" wird verstanden, daß der Lack einerseits beim Spritzvorgang, also bei hohen Schergeschwindigkeiten, eine so niedrige Viskosität hat, daß er leicht zerstäubt werden kann, und andererseits beim Auftreffen auf dem Substrat, also bei niedrigen Schergeschwindigkeiten, eine so hohe Viskosität hat, daß er genügend standfest ist und keine Läuferbildung zeigt. Auch die Ausbildung eines ausgeprägten Metallic-Effektes hängt mit diesen Eigenschaften zusammen.

Zur Verbesserung der rheologischen Eigenschaften und zur besseren Ausbildung des Metallic-Effektes werden besondere Additive beschrieben (EP-0 281 936). Hierbei handelt es sich um spezielle Schichtsilikate, die beträchtliche Mengen an Alkali- oder Erdalkaliionen enthalten. Diese Ionen führen oft wegen ihrer wasseranziehenden Wirkung zu einer schlechten Schwitzwasserbeständigkeit im Gesamtaufbau einer Automobilbeschichtung.

Daher ist es ein Bestreben der Lackhersteller, solche Additive nach Möglichkeit zu vermeiden und als Bindemittel solche Polymere zu verwenden, die die gewünschten Eigenschaften von sich aus mitbringen, sogenannte "maßgeschneiderte" Polymere.

Einer der wichtigsten Vertreter dieser Spezies sind wäßrige Dispersionen von vernetzten Polymermikroteilchen.

So beschreibt die EP-0 502 934 eine Mikrogeldispersion. Diese dient sowohl zur Verbesserung der rheologischen Eigenschaften, als auch für eine Erhöhung der Gasungsstabilität von wäßrigen Metallicbasislacken. Die Herstellung dieser Mikrogeldispersionen erfolgt durch eine einstufige Polykondensation eines Polyesterpolyols mit einem Aminoplastharz (Melaminharz) in wäßriger Phase.

Die Verwendung dieses Mikrogels in Basislacken bei der Lackierung von Automobilkarosserien hat aber den Nachteil, daß die Haftung zwischen der Basislackschicht und einer darauf befindlichen, aus einem Pulverklarlack oder einer Pulverklarlackslurry aufgebrachten Klarlackschicht nicht den von der Automobilindustrie vorgeschriebenen Anforderungen entspricht.

Ferner sind aus der DE 195 04 015 A1 Mikrogele bekannt, die durch Polymerisation einer ethylenisch monofunktionellen Verbindung (Polyacrylat) mit mindestens einer ethylenisch di- oder multifunktionellen Verbindung in Gegenwart eines Polyesters. hergestellt werden. Der Polyester wirkt hierbei als Emulgator und Stabilisator.

Diese Mikrogele haben den Nachteil, daß die rheologischen Eigenschaften dieser Lakke nicht mehr den gesteigerten Anforderungen der Automobilindustrie entsprechen. Dies zeigt sich besonders deutlich hinsichtlich der Anforderungen an die Viskosität einerseits und an die Standsicherheit andererseits.

So ist es unter Verwendung dieser Mikrogele nicht möglich, einen wäßrigen Basislack bereitzustellen, der bei einer Schergeschwindigkeit von 1.000 s$^{-1}$ eine Viskosität von maximal 120 mPa·s hat und dabei so standfest ist, daß die notwendigen Schichtdicken von 20 - 30 μm (in Abhängigkeit des jeweiligen Farbtons) läuferfrei erreicht werden.

Aufgabe der vorliegenden Erfindung ist die Bereitstellung eines Polymers, das bei Verwendung in farbgebenden oder farblosen Beschichtungsmittelzubereitungen, insbesondere in Basislacken und Klarlacken für die Automobilindustrie, diesen Zubereitungen sowohl die erforderlichen rheologischen Eigenschaften, die dekorativen Eigenschaften, als auch die notwendige Haftung unter einem Lack auf Basis von Pulver oder Pulverslurry verleiht.

Diese Aufgabe wird gelöst durch ein Polymer, erhältlich durch ein mehrstufiges Polymerisationsverfahren, bei dem

a) in einem ersten Schritt eine Polymerisation in wäßriger Phase einer Monomerenmischung aus

i) 7,5 bis 93 Gew.-% mindestens einer ethylenisch monofunktionellen Verbindung;
ii) 0,3 bis 47,5 Gew.-% mindestens einer ethylenisch di- oder multifunktionellen Verbindung;

in Gegenwart eines Polymers, ausgewählt aus einem

- Polyesterpolyol mit einem zahlenmittleren Molekulargewicht von 500 bis 10.000, einer Säurezahl zwischen 22 und 224 und einer OH-Zahl zwischen 60 bis 400 durchgeführt wird;
- Polyurethan mit einem zahlenmittleren Molekulargewicht von 500 bis 20.000, einer Säurezahl zwischen 25 und 150 und einer OH-Zahl zwischen 50 bis 350; wobei das Polyurethan im statistischen Mittel mindestens eine, aus einem Polyesterpolyol stammende freie Carboxylgruppe pro Molekül aufweist; und/oder
- Polyacrylat mit einem zahlenmittleren Molekulargewicht von 2.000 bis 100.000, einer Säurezahl zwischen 25 und 300 und einer OH-Zahl zwischen 50 bis 250;

b) in einem folgenden Schritt eine Umsetzung des aus Schritt a) erhaltenen Produkts mit

iii) 5 bis 85 Gew.-% mindestens einer ethylenisch monofunktionellen Verbindung;

durchgeführt wird, wobei die Summe der Gewichtsanteile der Komponenten (i) bis (iii) 100 Gew.-% beträgt;

gefolgt von einer Umsetzung des aus Schritt b) erhaltenen Produkts mit einem Vernetzer.

Diese Aufgabe wird ebenso gelöst durch ein Polymer, erhältlich durch ein mehrstufiges Polymerisationsverfahren, bei dem

a) in einem ersten Schritt eine Polymerisation in wäßriger Phase einer Monomerenmischung aus

i) 15 bis 95 Gew.-% mindestens einer ethylenisch monofunktionellen Verbindung;

in Gegenwart eines Polymers, ausgewählt aus einem

- Polyesterpolyol mit einem zahlenmittleren Molekulargewicht von 500 bis 10.000, einer Säurezahl zwischen 22 und 224 und einer OH-Zahl zwischen 60 bis 400 durchgeführt wird;
- Polyurethan mit einem zahlenmittleren Molekulargewicht von 500 bis 20.000, einer Säurezahl zwischen 25 und 150 und einer OH-Zahl zwischen 50 bis 350; wobei das Polyurethan im statistischen Mittel mindestens eine, aus einem Polyesterpolyol stammende freie Carboxylgruppe pro Molekül aufweist; und/oder
- Polyacrylat mit einem zahlenmittleren Molekulargewicht von 2.000 bis 100.000, einer Säurezahl zwischen 25 und 300 und einer OH-Zahl zwischen 50 bis 250;

b) in einem folgenden Schritt eine Umsetzung des aus Schritt a) erhaltenen Produkts mit

ii) 2,5 bis 83 Gew.-% mindestens einer ethylenisch monofunktionellen Verbindung;
iii) 0,1 bis 42,5 Gew.-% mindestens einer ethylenisch di- oder multifunktionellen Verbindung;

durchgeführt wird, wobei die Summe der Gewichtsanteile der Komponenten (i) bis (iii) 100 Gew.-% beträgt;

gefolgt von einer Umsetzung des aus Schritt b) erhaltenen Produkts mit einem Vernetzer.

Gleichermaßen wird die Aufgabe durch ein Polymer gelöst, erhältlich durch ein mehrstufiges Polymerisationsverfahren, bei dem

a) in einem ersten Schritt eine Polymerisation in wäßriger Phase einer Monomerenmischung aus

i) 7,5 bis 93 Gew.-% mindestens einer ethylenisch monofunktionellen Verbindung;
ii) 0,3 bis 47,5 Gew.-% mindestens einer ethylenisch di- oder multifunktionellen Verbindung;

in Gegenwart eines Polymers, ausgewählt aus einem

- Polyesterpolyol mit einem zahlenmittleren Molekulargewicht von 500 bis 10.000, einer Säurezahl zwischen 22 und 224 und einer OH-Zahl zwischen 60 bis 400 durchgeführt wird;
- Polyurethan mit einem zahlenmittleren Molekulargewicht von 500 bis 20.000, einer Säurezahl zwischen 25 und 150 und einer OH-Zahl zwischen 50 bis 350; wobei das Polyurethan im statistischen Mittel mindestens eine, aus einem Polyesterpolyol stammende freie Carboxylgruppe pro Molekül aufweist; und/oder
- Polyacrylat mit einem zahlenmittleren Molekulargewicht von 2.000 bis 100.000, einer Säurezahl zwischen 25 und 300 und einer OH-Zahl zwischen 50 bis 250;

b) in einem folgenden Schritt eine Umsetzung des aus Schritt a) erhaltenen Produkts mit

iii) 2,5 bis 83 Gew.-% mindestens einer ethylenisch monofunktionellen Verbindung;
iv) 0,1 bis 42,5 Gew.-% mindestens einer ethylenisch di- oder multifunktionellen Verbindung;

durchgeführt wird, wobei die Summe der Gewichtsanteile der Komponenten (i) bis (iv) 100 Gew.-% beträgt;

gefolgt von einer Umsetzung des aus Schritt b) erhaltenen Produkts mit einem Vernetzer.

Eine weitere erfindungsgemäße Lösung der Aufgabe ist durch ein Polymer gegeben, erhältlich durch ein mehrstufiges Polymerisationsverfahren, bei dem

a) in einem ersten Schritt eine Polymerisation in wäßriger Phase einer Monomerenmischung aus

i) 15 bis 95 Gew.-% mindestens einer ethylenisch monofunktionellen Verbindung;

in Gegenwart eines Polymers, ausgewählt aus einem

- Polyesterpolyol mit einem zahlenmittleren Molekulargewicht von 500 bis 10.000, einer Säurezahl zwischen 22 und 224 und einer OH-Zahl zwischen 60 bis 400 durchgeführt wird;
- Polyurethan mit einem zahlenmittleren Molekulargewicht von 500 bis 20.000, einer Säurezahl zwischen 25 und 150 und einer OH-Zahl zwischen 50 bis 350; wobei das Polyurethan im statistischen Mittel mindestens eine, aus einem Polyesterpolyol stammende freie Carboxylgruppe pro Molekül aufweist; und/oder
- Polyacrylat mit einem zahlenmittleren Molekulargewicht von 2.000 bis 100.000, einer Säurezahl zwischen 25 und 300 und einer OH-Zahl zwischen 50 bis 250;

b) in einem folgenden Schritt eine Umsetzung des aus Schritt a) erhaltenen Produkts mit

ii) 5 bis 85 Gew.-% mindestens einer ethylenisch monofunktionellen Verbindung;

durchgeführt wird, wobei die Summe der Gewichtsanteile der Komponenten (i) bis (ii) 100 Gew.-% beträgt;

gefolgt von einer Umsetzung des aus Schritt b) erhaltenen Produkts mit einem Vernetzer.

Das Mengenverhältnis zwischen der Summe der in den Schritten a) und b) eingesetzten ethylenisch mono- di- und/oder multifunktionellen Verbindungen und der Summe des aus einem Polyesterpolyol, Polyurethan und/oder Polyacrylat ausgewählten Polymers und Vernetzers können zwischen 85 : 15 und 50 : 50 betragen.

Diese Polymere haben gegenüber den Mikrogelen des Standes der Technik den Vorteil, daß sie einem Metallicbasislack eine hervorragende Gasungsstabilität sowie ausgezeichnete rheologische Eigenschaften verleihen, wobei es mit diesem Metallicbasislack erstmals möglich ist, in herkömmlichen Mehrschichtlackierungen von Automobilen unter einer Klarlackschicht aus einem Pulverklarlack oder einem Pulverslurryklarlack eine ausreichende Haftung und Schwitzwasserbeständigkeit zu erzielen, ohne daß bei Verwendung einer Pulverklarlackslurry der sogenannte "mud-cracking"-Effekt auftritt.

Die rheologischen Eigenschaften der unter Verwendung dieser Polymere hergestellten Beschichtungszusammensetzungen sind gegenüber denen des Standes der Technik deutlich verbessert. So kann mit einem Lack, der das erfindungsgemäße Polymer beispielsweise in einer Menge von 20 Gew.-% (bezogen auf den Festkörperanteil) enthält, eine Viskosität von höchstens 100 mPa.s bei einer Schergeschwidigkeit von $1.000^{-1}$ erhalten werden, wobei die Trokkenfilmdicke der ausgehärteten Basislackschicht mindestens 20 µm beträgt, ohne daß Läufer zu beobachten sind.

Den auf vier verschiedene Herstellungsweisen erhältlichen Polymeren ist gemeinsam, daß sie aus einem dreistufigen Herstellungsprozeß stammen. Der erste Herstellungsschritt a) umfaßt eine Polymerisation von mindestens einem Monomer in Gegenwart eines Polymers. Dieses Polymer liegt aufgrund seiner speziellen Eigenschaften, insbesondere aufgrund seiner ausreichend hohen Säurezahl, in der Polymerisationslösung in dispergierter Teilchenform vor. Das während des Schritts a) zugegebene Monomer wandert in das Innere der Polymerteilchen und wird dann mit geeigneten, dem Fachmann bekannten Verfahren, polymerisiert. Hierdurch entsteht ein Polymer, das einen Kern aus dem polymerisierten Monomer aufweist, der von dem während der Polymerisation anwesenden Polymer (ausgewählt aus Polyesterpolyol, Polyurethan und/oder Polyacrylat) umgeben ist. Dieser Aufbau entspricht im wesentlichen einer Core/Shell-Struktur.

Der Kern ist dabei je nach gewählten Verfahrensbedingungen vernetzt oder unvernetzt: Wird in dem Schritt a) mindestens ein ethylenisch monofunktionelles Monomer polymerisiert, weist das nach dem Verfahrensschritt a) entstandene Polymer einen unvernetzten Kern auf. Wird aber im Schritt a) mindestens ein ethylenisch monofunktionelles Monomer mit mindestens einem ethylenisch di- oder multifunktionellen Monomer polymerisiert, so entsteht ein Polymer mit einem vernetzten Kern.

Wichtig bei diesem Schritt a) ist, daß das aus einem Polyesterpolyol, Polyurethan und/oder Polyacrylat ausgewählte Polymer in einer solch ausreichenden Menge vorliegt, daß das zugesetzte Monomer in der Reaktionsmischung ausreichend stabil dispergiert wird. Ansonsten würde die Polymerisation nur unvollständig verlaufen und schließlich zur Koagulation der gesamten Dispersion führen.

Der zweite Herstellungsschritt b) bewirkt, daß das aus Schritt a) stammende Polymerteilchen eine weitere Polymerschicht erhält. Auch hier wandert das im Schritt b) zugegebene Monomer in das aus Schritt a) stammende, aus einem Polyesterpolyol, Polyurethan und/oder Polyacrylat ausgewählte Polymer (das die äußere Schale des Polymerteilchens aus Schritt a) bildet) und wird anschließend polymerisiert. Auf diese Weise erhält man ein Polymerteilchen, das einen Kern aus den polymerisierten Monomer(en) aus Schritt a), eine darauf befindliche erste Schale aus den polymerisierten Monomer(en) aus Schritt b) und eine darauf befindliche zweite Schicht aus dem aus einem Polyesterpolyol, Polyurethan und/oder Polyacrylat ausgewählten Polymer aufweist. Wie zuvor unter Schritt a) ausgeführt, ist die den Kern umgebende Polymerschicht aus den Monomeren aus Schritt b) in Abhängigkeit von einem ethylenisch di- oder multifunktionellen Monomer vernetzt oder unvernetzt.

Wichtig sowohl bei dem Herstellungsschritt a) als auch b) ist, daß bei Verwendung einer Monomerenmischung aus mindestens einem ethylenisch monofunktionellen Monomer und mindestens einem ethylenisch di- oder multifunktionellen Monomer in einem dieser Herstellungsschritte das resultierende Polymer vollständig vernetzt ist (die vollständige Vernetzung bezieht sich aber nur auf das Polymer, das unmittelbar aus der Monomerenmischung erhältlich ist, und beispielsweise nicht auf das aus einem Polyesterpolyol, Polyurethan und/oder Polyacrylat ausgewählten Polymer).

Den Grad der Vernetzung der Polymerteilchen erkennt man am Gehalt der unlöslichen Anteile. Die unlöslichen Anteile werden mittels der sogenannten "THF-Methode" bestimmt. Hierzu werden in ein Zentrifugenröhrchen ca. 1 g der Mikrogeldispersion eingewogen, mit 10 ml Tetrahydrofuran versetzt und ca. 1 Minute lang in einem Ultraschallbad homogenisiert. Dann wird mittels einer Zentrifuge mit Festwinkel-Rotor 15 Minuten lang bei 13.500 U/min zentrifugiert. Anschließend wird der Überstand vorsichtig abdekantiert und das Röhrchen in einem Laborofen 6 h lang bei 105 °C getrocknet. Nach Abkühlen des Röhrchens wird der Rückstand zurückgewogen. Die unlöslichen Anteile werden gemäß folgender Formel berechnet:

$$\% \text{ Unlösliche Anteile} = \text{Rückstand} * 10000 \, / \, \text{Einwaage} * \% \text{ Festkörpergehalt}$$

der Mikrogeldispersion

Unter dem Begriff "vollständig vernetzt" werden solche Polymere verstanden, die einen unvernetzten Anteil - bezogen auf das aus den eingesetzten Monomeren stammende Polymer - von nicht mehr als 5 Gew-% aufweisen. Im dritten Herstellungsschritt wird das aus dem Schritt b) stammende Polymerteilchen mit einem Vernetzer umgesetzt. Erst in diesem Schritt wird das aus einem Polyesterpolyol, Polyurethan und/oder Polyacrylat ausgewählte Polymer vernetzt, wobei die funktionellen Gruppen des Vernetzers mit den OH-Gruppen dieser Polymere reagieren. Die Menge an Vernetzer ist bei diesem Herstellungsschritt so zu wählen, daß diese letzte Polymerschicht entsprechend den zuvor genannten Kriterien vollständig vernetzt ist. Im allgemeinen liegt das Mengenverhältnis von aus einem Polyesterpolyol, Polyurethan und/oder Polyacrylat ausgewählten Polymer zu Vernetzer zwischen 90:10 und 40:60.

Als Endprodukt erhält man ein Polymerteilchen, dessen Äußeres vollständig vernetzt ist. Aufgrund dieser Eigenschaft kann es an einer Lackfilmbildung nicht teilnehmen, und ist gegenüber anderen reaktionsfähigen Polymeren oder auch Vernetzern weitgehend inert.

Die bei der Herstellung des erfindungsgemäßen Polymers eingesetzte ethylenisch monofunktionelle Verbindung kann in den Schritten a) und b) gleich oder verschieden sein.

Auch kann die bei der Herstellung des erfindungsgemäßen Polymers eingesetzte ethylenisch di- oder multifunktionelle Verbindung in den Schritten a) und b) gleich oder verschieden sein. Je höher der gewünschte Härtegrad oder die Vernetzungsdichte des erfindungsgemäßen Polymers sein soll, um so höher ist der Anteil ethylenisch di- oder multifunktioneller Verbindungen in den Schritten a) und b).

Besonders gute Ergebnisse können erhalten werden, wenn das während der Polymerisation anwesende Polyesterpolyol, Polyurethan und/oder Polyacrylat im statistischem Mittel mindestens eine freie Carboxylgruppe pro Molekül aufweist, die aus Trimellithsäure oder Trimellithsäureanhydrid stammt. Dies ermöglicht eine besonders hohe Reaktionsgeschwindigkeit während der Vernetzung.

Eine mögliche Erklärung für diese Tatsache könnte die vergleichsweise starke Acidität der Carboxylgruppe der Trimellithsäure sein.

Besonders geeignete Beispiele für die ethylenisch monofunktionelle Verbindung sind Alkylester oder Hydroxyalkylester der Acryl- oder Methacrylsäure. Ebenso eignen sich Vinylacetat, Vinyltoluol, Styrol und/oder Acrylamid.

Als Alkyl(meth)acrylat oder Hydroxyalkyl(meth)acrylat sind solche mit 1 bis 18 Kohlenstoffatomen im Alkylrest bevorzugt, wobei der Alkylrest substituiert oder unsubstituiert sein kann.

Als Alkyl(meth)acrylat sind insbesondere Laurylacrylat, Isobornyl(meth)acrylat, Cyclohexyl(meth)acrylat, tert.-Butylcyclohexyl(meth)acrylat, Benzyl(meth)acrylat, Glycidyl(meth)acrylat und Trimethylcylohexyl(meth)acrylat zu nennen. Besonders bevorzugt sind α-Ethylhexyl(meth)acrylat, Methyl(meth)acrylat, n-Butyl(meth)acrylat und tert.-Butyl(meth)acrylat.

Als Hydroxyalkyl(meth)acrylat sind bevorzugterweise 2-Hydroxyethyl(meth)acrylat, 2-Hydroxypropyl(meth)acrylat, 2-Hydroxybutyl(meth)acrylat, Hexandiol-1,6-mono-(meth)acrylat und 4-Hydroxybutyl(meth)acrylat zu nennen.

Als ethylenisch di- oder multifunktionelle Verbindung werden vorzugsweise Diacrylate, Triacrylate und/oder (Meth)acrylsäureester polyfunktioneller Alkohole eingesetzt.

Insbesondere werden Allyl(meth)acrylat, Hexandioldi(meth)acrylat, Ethylenglykoldi(meth)acrylat, Neopentylglykoldi(meth)acrylat, Butandioldi(meth)acrylat oder Trimethylolpropantri(meth)acrylat verwendet.

Die zuvor genannten ethylenisch mono- bzw. di- oder multifunktionellen Verbindungen können alleine oder in Abmischung eingesetzt werden.

In Abmischung mit den ethylenisch monofunktionellen Verbindungen oder den ethylenisch di- oder multifunktionellen Verbindungen eignet sich insbesondere ein Polyester oder ein Polyurethan mit einer Säurezahl von weniger als 5, insbesondere weniger als 3, der im statistischem Mittel bis zu eine polymerisierbare Doppelbindung pro Molekül enthält.

In Abmischung mit ethylenisch di- oder multifunktionellen Verbindungen eignet sich ebenfalls ein Polyester oder ein Polyurethan mit einer Säurezahl von weniger als 5, insbesondere weniger als 3, der im statistischen Mittel mindestens 1,5 polymerisierbare Doppelbindungen pro Molekül enthält.

Das Molekulargewicht des Polyesters oder des Polyurethans kann durch das Mengenverhältnis und die Funktionalität der eingesetzten Ausgangsverbindungen gesteuert werden.

Die Menge an polymerisierbaren Doppelbindungen im Polyester kann durch die Menge der in den Polyester eingebauten Polyole und/oder Polycarbonsäuren, die eine polymerisierbare Doppelbindung enthalten, gesteuert werden.

Je nach Viskosität des hergestellten Polyesters kann dieser zur besseren Handhabung in niedrigmolekularen ethylenisch monofunktionellen Verbindungen angelöst werden, die ebenfalls zur Polymerisation verwendet werden. Zur Herstellung des Polyesters eignen sich Polyole ohne polymerisierbare Doppelbindung wie Ethylenglykol, Diethylenglykol, Triethylenglykol, Tetraethylenglykol, Hexaethylenglykol, 1,2-Propylenglykol, 1,3-Propylenglykol, 1,4-Butandiol, 1,5-Pentandiol, 1,6-Hexandiol, 2,2-Dimethylpropandiol, 2,2,4-Trimethylpentandiol, 1,3-Dimethylolcyclohexan, 1,4-Dimethylolcyclohexan, Hydroxypivalinsäureneopentylglykolmonoester, Dimethylolpropionsäure und perhydriertem Bisphenol A; Trimethylolpropan und Glycerin; sowie Pentaerythrit, Dipentaerythrit und Di-(Trimethylolpropan).

Als Polycarbonsäuren ohne polymerisierbare Doppelbindung eignen sich Bernsteinsäure, Glutarsäure, Adipinsäure, Azelainsäure, Terephthalsäure, Phthalsäure, Isophthalsäure, Endomethylentetrahydrophthalsäure, 1,2-Cyclohexandicarbonsäure, 1,3-Cyclohexandicarbonsäure, 1,4-Cyclohexandicarbonsäure, Dodecandisäure, Dodecandicarbonsäure; dimere und polymere Fettsäuren und Trimellithsäure; sowie die möglichen Anhydride der zuvor genannten Säuren.

Als Polyole mit polymerisierbarer Doppelbindung eignen sich solche, ausgewählt aus der Gruppe

- von 1,4-Butendiol, Dimethylolpropionsäureallylester, Dimethylolpropionsäurevinylester, Trimethylolpropanmonoallylether, Glycerinmonoallylether;
- der Anlagerungsprodukte aus Allylglycidylether oder Glycidyl(meth)acrylat an einen eine Carboxylgruppe aufweisenden Polyester; sowie
- der Anlagerungsprodukte aus Allylglycidylether oder Glycidyl(meth)acrylat an Dimethylolpropionsäure.

Als Polycarbonsäuren mit polymerisierbarer Doppelbindung eignen sich Maleinsäure, Fumarsäure, Itaconsäure, Citraconsäure und Aconitsäure sowie deren mögliche Anhydride.

Die Menge an polymerisierbaren Doppelbindungen im Polyurethan kann durch die Menge der in dem Polyurethan eingebauten Bausteine, die eine polymerisierbare Doppelbindung enthalten, gesteuert werden.

Je nach Viskosität des hergestellten Polyurethans kann zur besseren Handhabung in solchen niedrigmolekularen ethylenisch monofunktionellen Verbindungen angelöst werden, die ebenfalls zur Polymerisation verwendet werden.

Zur Herstellung des Polyurethans eignen sich Polyisocyanate aus der Gruppe von 1,3-Bis(1-isocyanato-1-methylethyl)benzol (TMXDI, m-Tetramethylxylylendiisocyanat), (4,4'-Dicyclohexylmethandiisocyanat, Desmodur W), Isophorondiisocyanat (IPDI, 3,5,5-Trimethyl-1-isocyanato-3-isocyanatomethylcyclohexan) und 2,4,6-Trioxo-1,3,5-tris(6-isocyanatohexyl)hexahydro-1,3,5-triazin (Desmodur N3300).

Als Umsetzungsprodukte mit Polyisocyanat zur Herstellung des Polyurethans eignen sich die aus der Polyurethanchemie bekannten Rohstoffe wie Polyesterpolyole, Polyetherpolyole, niedrigmolekulare Polyole und Diamine. Zum Einbau von polymerisierbaren Doppelbindungen können niedrigmolekulare Polyole mit polymerisierbaren Doppelbindungen, Polyesterpolyole, die Bausteine mit polymerisierbaren Doppelbindungen enthalten und auch Hydroxyalkyl(meth)acrylate, wie 2-Hydroxyethyl(meth)acrylat, 2-Hydroxypropyl(meth)acrylat, 2-Hydroxybutyl(meth)acrylat, Hexandiol-1,6-mono(meth)acrylat und 4-Hydroxybutyl(meth)acrylat, verwendet werden.

Das im Schritt a) während der Polymerisation verwendete

- Polyesterpolyol kann ein zahlenmittleres Molekulargewicht zwischen 700 und 5.000, besonders bevorzugt zwischen 750 und 2.000; eine Säurezahl zwischen 35 und 150, besonders bevorzugt zwischen 40 und 120; und eine OH-Zahl zwischen 150 und 300, besonders bevorzugt zwischen 220 und 280;
- Polyurethan kann ein zahlenmittleres Molekulargewicht zwischen 700 und 5.000, besonders bevorzugt zwischen 750 und 2.500; eine Säurezahl zwischen 30 und 120, besonders bevorzugt zwischen 40 und 80; und eine OH-Zahl zwischen 150 und 300, besonders bevorzugt zwischen 220 und 280; und/oder
- Polyacrylat kann ein zahlenmittleres Molekulargewicht zwischen 2.500 und 20.000, besonders bevorzugt zwischen 4.000 und 10.000; eine Säurezahl zwischen 35 und 150, besonders bevorzugt zwischen 40 und 125; und eine OH-Zahl zwischen 100 und 250, besonders bevorzugt zwischen 150 und 200;

haben.

Dieses im Schritt a) während der Polymerisation verwendete Polyesterpolyol kann keine polymerisierbare Doppelbindung aufweisen und erhältlich sein aus der Umsetzung mindestens einer Polycarbonsäure ohne polymerisierbare Doppelbindung mit mindestens einem Polyol ohne polymerisierbare Doppelbindung.

Ebenso ist es möglich, daß dieses Polyesterpolyol im statistischem Mittel mindestens eine polymerisierbare Doppelbindung pro Molekül aufweist und erhältlich ist aus der Umsetzung

i. mindestens einer Polycarbonsäure ohne polymerisierbare Doppelbindung mit mindestens einem Polyol mit mindestens einer polymerisierbaren Doppelbindung;

ii. mindestens einer Polycarbonsäure mit mindestens einer polymerisierbaren Doppelbindung mit mindestens einem Polyol ohne polymerisierbare Doppelbindung; oder

iii. mindestens einer Polycarbonsäure mit mindestens einer polymerisierbaren Doppelbindung mit mindestens einem Polyol mit mindestens einer polymerisierbaren Doppelbindung.

Letzteres Polyesterpolyol ist dann zu empfehlen, wenn eine Copolymerisation mit den vinylischen Monomeren bevorzugt wird.

Die Polycarbonsäure ohne polymerisierbare Doppelbindung ist vorzugsweise ausgewählt aus der Gruppe von

- Bernsteinsäure, Glutarsäure, Adipinsäure, Acelainsäure, Terephthalsäure, Phthalsäure, Isophthalsäure, Endomethylentetrahydrophthalsäure, 1,2-Cyclohexandicarbonsäure, 1,3-Cyclohexandicarbonsäure, 1,4-Cyclohexandicarbonsäure, Dodecandisäure, Dodecandicarbonsäure;
- dimeren und polymeren Fettsäuren sowie Trimellithsäure;

sowie den möglichen Anhydriden hiervon.

Das Polyol ohne polymerisierbare Doppelbindung kann insbesondere ausgewählt sein aus der Gruppe von

- Ethylenglykol, Diethylenglykol, Triethylenglykol, Tetraethylenglykol, Hexaethylenglykol, 1,2-Propylenglykol, 1,3-Propylenglykol, 1,4-Butandiol, 1,5-Pentandiol, 1,6-Hexandiol, 2,2-Dimethylpropandiol, 2,2,4-Trimethylpentandiol, 1,3-Dimethylolcyclohexan, 1,4-Dimethylolcyclohexan, Hydroxypivalinsäureneopentylglykolmonoester, Dimethylolpropionsäure und perhydriertem Bisphenol A;
- Trimethylolpropan und Glycerin; sowie
- Pentaerythrit, Dipentaerythrit und Di-(Trimethylolpropan).

Die mindestens eine polymerisierbare Doppelbindung aufweisende Polycarbonsäure kann ausgewählt werden aus der Gruppe von Maleinsäure, Fumarsäure, Itaconsäure, Citraconsäure und Aconitsäure sowie den möglichen Anhydriden hiervon.

Bei dem mindestens eine polymerisierbare Doppelbindung aufweisenden Polyol handelt es sich insbesondere um

- 1,4-Butendiol, Dimethylolpropionsäureallylester, Dimethylolpropionsäurevinylester, Trimethylolpropanmonoallylether, Glycerinmonoallylether;
- Anlagerungsprodukte aus Allylglycidylether oder Glycidyl(meth)acrylat an einen eine Carboxylgruppe aufweisenden Polyester; sowie
- Anlagerungsprodukte aus Allylglycidylether oder Glycidyl(meth)acrylat an Dimethylolpropionsäure.

Entsprechend einer weiteren, erfindungsgemäßen Ausführungsform kann das im Schritt a) während der Polymerisation verwendete Polyesterpolyol durch mindestens eine Monocarbonsäure modifiziert sein, wobei die Monocarbonsäure ausgewählt ist aus der Gruppe der gesättigten oder ungesättigten, isolierten oder konjugierten, linearen oder verzweigten Fettsäuren sowie der Benzoesäure oder Crotonsäure.

Als Fettsäure werden verzweigte oder unverzweigte Monocarbonsäuren mit 5 bis 22 Kohlenstoffatomen bezeichnet. Zu nennen sind insbesondere Linolsäure, Ölsäure, Sojafettsäure, Isononansäure oder Isostearinsäure.

Bei dem erfindungsgemäß einzusetzenden Vernetzer handelt es sich vorzugsweise um ein Aminoplastharz oder ein Polyisocyanat.

Als Polyisocyanat sind besonders 1,3-Bis(1-isocyanato-1-methylethyl)benzol (TMXDI, m-Tetramethylxylylendiisocyanat), (4,4'-Dicyclohexylmethandiisocyanat, Desmodur W), Isophorondiisocyanat (IPDI, 3,5,5-Trimethyl-1-isocyanato-3-isocyanatomethylcyclohexan) und 2,4,6-Trioxo-1,3,5-tris(6-isocyanatohexyl)hexahydro-1,3,5-triazin (Desmodur N3300) zu nennen. Das Polyisocyanat kann hydrophil modifiziert werden, um so eine gleichmäßigere Vernetzung des Reaktionsproduktes zu erreichen.

Besonders ausgezeichnete Ergebnisse werden mit Melaminharzen erhalten.

Im Hinblick auf eine industrielle Herstellung des erfindungsgemäßen Polymers hat es sich als günstig herausgestellt, wenn der Neutralisationsgrad des Polyesterpolyols während des gesamten Herstellungsvorgangs zwischen 30 und 100 %, insbesondere zwischen 50 und 80 %, liegt. Dies ermöglicht eine besonders hohe Konstanz der gewünschten Eigenschaften der hergestellten Polymere.

Die Auswahl des optimalen Neutralisationsgrades ist dem Fachmann bekannt und kann durch wenige Laborversuche ermittelt werden.

Die Polymerisation des erfindungsgemäßen Polymers entsprechend Schritt a) erfolgt anhand der bekannten Verfahren, die für eine radikalische Polymerisation in wäßriger Phase geeignet sind. Zu nennen ist hier das Verfahren der Emulsionspolymerisation.

Es ist auch möglich, jedoch nicht zwingend, daß die Emulsionspolymerisation unter Verwendung eines Düsenstrahldispergators oder eines Microfluidizers durchgeführt wird. Hierdurch können einheitlichere Teilchengrößenverteilungen erreicht werden.

Als Polymerisationsinitiatoren können die für die Emulsionspolymerisation üblichen Peroxodisulfate, Wasserstoffperoxid oder auch organische Peroxide verwendet werden. Es sind auch andere Initiatoren wie z.B. Azoisobuttersäuredinitril verwendbar.

Als besonders vorteilhaft hat sich die Polymerisationsinitiierung durch ein Redoxsystem erwiesen. Dieses in der Emulsionspolymerisationstechnik gut bekannte Verfahren nutzt die Tatsache aus, daß Hydroperoxide durch geeignete Reduktionsmittel schon bei sehr niedrigen Temperaturen zum radikalischen Zerfall angeregt werden.

Geeignete Reduktionsmittel sind beispielsweise Natriummetabisulfit oder dessen Formaldehydanlagerungsprodukt (Na-Hydroxymethansulfinat). Sehr gut geeignet ist auch Isoascorbinsäure. Besonders vorteilhaft ist die Kombination aus tert.-Butylhydroperoxid, (Iso)ascorbinsäure und Eisen(II)sulfat.

Die Verwendung dieser Mischung hat den Vorteil, daß die Polymerisation bei Raumtemperatur gestartet werden kann.

Das erfindungsgemäße Polymer kann insbesondere für wäßrige Beschichtungszusammensetzungen verwendet werden.

Eine bervorzugte Verwendungsform der Erfindung ist der Einsatz in wäßrigen Basislacken, insbesondere Effektbasislacken für die Lackierung von Automobilen.

Die erfindungsgemäßen Polymere verleihen diesen wäßrigen Beschichtungszusammensetzungen ein ausgezeichnetes Applikationsverhalten und hervorragende dekorative Eigenschaften, die sich beispielsweise anhand eines ausgeprägten Metalleffekts, einer sehr guten Resistenz gegen Ablaufen in der Vertikalen, Wolkenfreiheit, Resistenz gegen Wiederanlösen durch unterschiedliche Klarlacke, gute Schleifriefenabdeckung und der Erfüllung der in der Automobilindustrie üblichen Eigenschaftsvorgaben, wie Haftungs-, Steinschlag- und Schwitzwasserbeständigkeit, zeigen.

So können die erfindungsgemäßen Polymere ebenso gut für die Herstellung von wäßrigen Klarlacken, Einbrennlacken für industrielle Anwendungen sowie Anstrichfarben für den Bautensektor verwendet werden.

Um zu Polymeren in nicht-wäßriger Phase zu gelangen, muß den erfindungsgemäßen, in wäßriger Phase vorliegenden Polymeren, entsprechend einer besonderen Ausführungsform der Erfindung, das Wasser entzogen werden.

Dies kann durch jedes bekannte Verfahren, beispielsweise durch Sprühtrocknen, Gefriertrocknen oder Eindampfen, gegebenenfalls unter vermindertem Druck, geschehen.

Nach dem Wasserentzug kann das erfindungsgemäße Polymer in Pulverform oder als harzartige Masse vorliegen.

Gemäß einer besonders bevorzugten Variante der Erfindung wird das in wäßriger Phase vorliegende Polymer in eine flüssige organische Phase überführt. Dies kann durch eine azeotrope Destillation geschehen. Hierbei kann man so verfahren, daß die wäßrige Polymerdispersion bei erhöhter Temperatur, gegebenenfalls unter vermindertem Druck, kontinuierlich oder diskontinuierlich in einen Reaktor gegeben wird, der ein Schleppmittel, d.h. ein Lösemittel oder ein Gemisch mehrerer Lösemittel, von denen mindestens eines ein Azeotrop mit Wasser bildet, enthält.

Der Reaktor ist mit einer geeigneten Kondensierungsvorrichtung und einem Wasserabscheider mit Rücklauf zum Reaktor ausgestattet. Nach Erreichen der Siedetemperatur des Azeotropes steigt die gasförmige azeotrope Phase (d.h. Schleppmittel und Wasser) in die Kondensierungsvorrichtung auf. Dort kondensiert das Azeotrop und läuft von dort in den Wasserabscheider. Im Wasserabscheider erfolgt eine Phasentrennung zwischen dem Schleppmittel und dem Wasser. Bei einer kontinuierlich durchgeführten azeotropen Destillation fließt das Schleppmittel wieder zurück in den Reaktor, so daß nur geringe Mengen an Schleppmittel eingesetzt werden müssen. Das aus dem Wasserabscheider erhaltene Wasser ist frei von organischen Bestandteilen und kann erneut zur Herstellung der erfindungsgemäßen wäßrigen Polymerdispersion eingesetzt werden.

Das Schleppmittel kann aus der Gruppe von Xylol, Butylacetat, Methylisobutylketon, Methylamylketon, Pentanol, Hexanol oder Ethylhexanol ausgewählt sein.

Ein wesentlicher Vorteil hierbei ist, daß das Schleppmittel nach erfolgter Überführung in die organische Phase dort verbleibt und für die Verwendung lösemittelhaltiger Beschichtungszusammensetzungen von Vorteil ist. Hinsichtlich der weiteren Verwendung dieser in organischer Phase vorliegenden Polymere zur Herstellung von lösemittelhaltigen Beschichtungszusammensetzungen handelt es sich bei den genannten Schleppmitteln um geeignete Lösemittel.

Dieses Verfahren zeichnet sich aufgrund der gleichzeitigen Wiederverwendung des Schleppmittels und des anfallenden Wassers ohne zusätzliche Verfahrensschritte durch ein außerordentliches Maß an Umweltverträglichkeit aus, da keine zu entsorgende Nebenprodukte entstehen, die im Vergleich mit bekannten Herstellungsverfahren in großen Mengen anfallen.

In einer besonderen Form der azeotropen Destillation wird diese dergestalt durchgeführt, daß die wäßrige Polymerdispersion in ein Gemisch eines Schleppmittels und einem hochsiedenden, organischen Lösemittel gegeben wird. Dieses hochsiedende, organische Lösemittel verhindert während der Überführung in die organische Phase ein Anbacken des Polymers an der Wand des Reaktors.

Das hochsiedende Lösemittel kann aus der Gruppe der Glykolester, wie z.B. Butylglykolacetat und/oder Butyldiglykolacetat ausgewählt sein.

Wie im Falle des Schleppmittels handelt es sich bei dem hochsiedenden Lösemittel ebenfalls um eine für eine lösemittelhaltige Beschichtungszusammensetzung übliche Komponente.

Das auf diese Weise erhältliche erfindungsgemäße Polymer kann insbesondere für lösemittelhaltige Beschichtungszusammensetzungen verwendet werden.

Eine bevorzugte Verwendungsform der Erfindung ist der Einsatz in lösemittelhaltigen Basislacken, insbesondere Effektbasislacken und Klarlacken, für die Decklackierung bzw. Lackierung von Automobilen.

Dieses in organischer Phase vorliegende erfindungsgemäße Polymer verleiht diesen lösemittelhaltigen Beschichtungszusammensetzungen ebenfalls ein ausgezeichnetes Applikationsverhalten und hervorragende dekorative Eigenschaften, die sich beispielsweise anhand eines ausgeprägten Metalliceffekts, einer sehr guten Resistenz gegen Ablaufen in der Vertikalen (SCA - Sagging Control Agent), Wolkenfreiheit, Resistenz gegen Wiederanlösen durch Klarlack, gute Schleifriefenabdeckung und der Erfüllung der in der Automobilindustrie üblichen Eigenschaftsvorgaben zeigen. Die erfindungsgemäßen Polymere können ebenso gut für die Herstellung von lösemittelhaltigen Klarlacken, Coil-Coatingzusammensetzungen und Einbrennlacken für industrielle Anwendungen sowie Anstrichfarben für den Bautensektor verwendet werden.

Eine weitere Besonderheit des erfindungsgemäßen Polymers liegt in seiner hohen Scherbeständigkeit. Diese Eigenschaft ermöglicht erstmals eine Verwendung solcher Polymere zur Herstellung von Pigmentzubereitungen, insbesondere als Anreibemittel für Tönpasten. Hierdurch wird erreicht, daß die so hergestellten Tönpasten einen hohen Pigmentgehalt bei gleichzeitig niedriger Viskosität aufweisen.

Die nachfolgenden Beispiele dienen der Erläuterung der Erfindung.

**BEISPIELE:**

**Herstellung der Ausgangsprodukte**

**Polyesterdispersion 1:**

In einem 10 l Reaktionsgefäß mit Rührer und Füllkörperkolonne werden 292,2 g 1,6-Hexandiol, 1386,9 g einer dimerisierten Fettsäure (Pripol® 1013 der Firma Unichema) und 1238,3 g Di-Trimethylolpropan eingewogen und so aufgeheizt, daß die Kolonnenkopftemperatur 100°C nicht überschreitet. Die max. Veresterungstemperatur beträgt 220°C. Bei einer Säurezahl unter 10 wird abgekühlt. Bei 150 °C werden 475,5 g Trimellithsäureanhydrid zugegeben und so aufgeheizt, daß die Kolonnenkopftemperatur 100 °C nicht überschreitet. Die maximale Veresterungstemperatur beträgt 170 °C. Bei einer Säurezahl von 40 wird abgekühlt. Man erhält einen Polyester mit einem berechneten Molekulargewicht von 1400 und einer Hydroxylzahl von 250.

Bei einer Temperatur unterhalb 100 °C werden eine Mischung aus 124 g Dimethylethanolamin und 4012 g vollentsalztem Wasser zudosiert und nachfolgend 1902 g vollentsalztes Wasser zugegeben. Man erhält eine stabile Dispersion mit einem Festkörpergehalt von 35 % (60 Minuten bei 120 °C) und einem pH-Wert von 5,60. Der Neutralisationsgrad beträgt 60 %.

**Polyesterdispersion 2:**

In einem 4 l Reaktionsgefäß mit Rührer und Füllkörperkolonne werden 332,8 g Neopentylglykol, 283,2 g 1,6 Hexandiol, 696 g einer dimerisierten Fettsäure (Pripol® 1013 der Firma Unichema) und 184,2 g Hexahydrophthalsäureanhydrid eingewogen und so aufgeheizt, daß die Kolonnenkopftemperatur 100 °C nicht überschreitet. Die max. Veresterungstemperatur beträgt 220 °C. Bei einer Säurezahl unter 10 wird abgekühlt. Bei 150 °C werden 307,2 g Trimellithsäureanhydrid zugegeben und so aufgeheizt, daß die Kolonnenkopftemperatur 100 °C nicht überschreitet. Die max. Veresterungstemperatur beträgt 180 °C. Bei einer Säurezahl von 30 wird abgekühlt. Man erhält einen Polyester mit einem berechneten Molekulargewicht von 1870 und einer Hydroxylzahl von 83.

Bei einer Temperatur unterhalb 100 °C werden eine Mischung aus 42,7 g Dimethylethanolamin und 1380 g vollentsalztem Wasser zudosiert und nachfolgend 1910 g vollentsalztes Wasser zugegeben. Man erhält eine stabile Dispersion mit einem Festkörpergehalt von 30 % (60 Minuten bei 120 °C) und einem pH-Wert von 5,53. Der Neutralisationsgrad beträgt 60 %.

**Polyester 3 (für Herstellung der PU-Dispersion 2):**

In einem 4 l Reaktionsgefäß mit Rührer und Füllkörperkolonne werden 1352 g Neopentylglykol eingewogen und auf 140 °C aufgeheizt. Bei 140 °C werden 1348 g Trimellithsäureanhydrid zugegeben und so aufgeheizt, daß die Kolonnenkopftemperatur 100 °C nicht überschreitet. Die maximale Veresterungstemperatur beträgt 160 °C. Bei einer Säurezahl von 150 wird abgekühlt und mit 810 g Methylethylketon anverdünnt. Man erhält einen Polyester mit einem berechneten Molekulargewicht von 380 und einer Hydroxylzahl von 295.

**Polyacrylatdispersion 1:**

In einem 4 l Reaktionsgefäß mit Rührer und 2 Zulaufgefäßen werden 200 g Methylethylketon eingewogen und auf 80 °C aufgeheizt. Bei 80 °C wird aus einem Zulaufgefäß eine Mischung aus 289,6 g 2-Ehtylhexylacrylat, 250,3 g 4-Hydroxybutylacrylat und 100,1 g Acrylsäure innerhalb von 2 Stunden gleichmäßig zudosiert. Aus einem zweiten Zulaufgefäß wird eine Mischung aus 24 g Azoisobuttersäuredinitril und 160 g Methylethylketon innerhalb von 2,5 Stunden gleichmäßig zudosiert. Beide Zuläufe werden gleichzeitig gestartet. Nach Beendigung des zweiten Zulaufes wird 1,5 Stunden nachpolymerisiert.
Danach wird eine Mischung aus 12,4 g Dimethylethanolamin und 900 g vollentsalztes Wasser zugegeben und anschließend das Methylethylketon durch Vakuumdestillation entfernt. Man erhält eine stabile Dispersion mit einer Säurezahl von 121 und einem Festkörpergehalt von 43 % (60 Minuten bei 120 °C).

**Polyurethandispersion 1 (für Lackbeispiele):**

In einem 6 l Reaktionsgefäß mit Rückflußkühler werden 602,3 g eines Polyesters mit einem zahlenmittleren Molekulargewicht von 1440 auf Basis einer dimerisierten Fettsäure (Pripol® 1013 der Firma Unichema) und 1,6-Hexandiol mit einer Säurezahl unter 3, 56 g Dimethylolpropionsäure, 306,2 g Tetramethylxylylendiisocyanat, 241 g Methylethylketon und 0,9 g Dibutylzinndilaurat eingewogen. Diese Mischung wird solange bei 80 °C gehalten, bis der Isocyanatgehalt 2,35 % beträgt. Anschließend werden 90,4 g Trimethylolpropan und 23 g Methylethylketon zugegeben und bei 80 °C auf einen Isocyanatgehalt von < 0,03 % gefahren. Danach werden eine Mischung aus 33,5 g Diemethylethanolamin und 1085 g vollentsalztem Wasser und anschließend 1598 g vollentsalztes Wasser zugegeben. Nach einer Vakuumdestillation, in der das Methylethylketon entfernt wird, erhält man eine Dispersion mit einem Festkörpergehalt von 28 % (60 Minuten bei 120 °C).

**Polyurethandispersion 2:**

In einem 2 l Reaktionsgefäß mit Rückflußkühler werden 319,2 g des Polyesters 3, 150 g Di-Trimethylolpropan, 201 g Methyethylketon und 0,5 g Dibutylzinndilaurat eingeworgen. Diese Mischung wird auf 70 °C aufgeheizt. Bei 70 °C werden 265,9 g Tetramethylxylylendiisocyanat innerhalb einer Stunde zudosiert. Nach der Dosierung wird bei 80 °C gefahren, bis der Isocyanatgehalt < 0,03 % beträgt. Anschließend wird eine Mischung aus 32,1 g Dimethylethanolamin und 935 g vollentsalztem Wasser zugegeben. Nach einer Vakuumdestillation, in der das Methylethylketon entfernt wird, erhält man eine Dispersion mit einem Festkörpergehalt von 40 % (60 Minuten bei 120 °C).

**Herstellung der erfindungsgemäßen Polymere**

**Polymerdispersion 1:**

In einem 4 l Reaktionsgefäß mit Rückflußkühler und einem Zulaufgefäß werden 720 g der Polyesterdispersion 1 eingewogen und unter Rühren nacheinander 106 g Butylacrylat, 16,5 g Methylmethacrylat, 3,5 g Allylmethacrylat und 119 g vollentsalztes Wasser zugegeben. Danach werden eine Mischung aus 0,38 g Ascorbinsäure und 13,1 g vollentsalztem Wasser und eine Mischung aus 0,0025 g Eisen II-Sulfat und 12,6 g vollentsalztem Wasser zugegeben. Anschließend wird eine Mischung aus 0,63 g Tert.-Butylhydroperoxid (70 %ig in Wasser) und 14,4 g vollentsalztem Wasser innerhalb von 10 Minuten zudosiert und die Polymerisation gestartet. Die Temperatur steigt bis 41 °C. Eine Stunde nach Erreichen der Maximaltemperatur der Polymerisation werden bei 30 °C nacheinander 227,1 g Butylacrylat, 24,9 g Hydroxyethylacrylat und 252 g vollentsalztes Wasser zugegeben. Danach werden eine Mischung aus 0,76 g Ascorbinsäure und 26,2 g vollentsalztem Wasser und eine Mischung aus 0,005 g Eisen II-Sulfat und 25,6 g vollentsalztem Wasser zugegeben. Anschließend wird eine Mischung aus 1,26 g tert.-Butylhydroperoxid (70 %ig in Wasser) und 28,8 g vollentsalztem Wasser innerhalb von 10 Minuten zudosiert und die Polymerisation gestartet. Die Temperatur steigt bis 45 °C. Eine Stunde nach Erreichen der Maximaltemperatur der Polymerisation wird bei 35 °C eine Mischung aus 0,38 g Ascorbinsäure und 20 g vollentsalztem Wasser in 5 Minuten zudosiert.

Nach 15 Minuten werden 303 g eines handelsüblichen Melaminharzes (Cymel® 327 der Firma Dyno Cytec) und 718 g vollentsalztes Wasser dem Ansatz zugegeben. Es wird auf 80 °C erhitzt und bei dieser Temperatur 5 Stunden kondensiert. Danach wird abgekühlt und 6,4 g Dimethylethanolamin zugegeben.

Man erhält eine stabile Dispersion mit einem Festkörpergehalt von 26 % (60 Minuten bei 120°C). Eine Probe dieser Dispersion mit Tetrahydrofuran verdünnt zeigt eine starke Trübung.

**Polymerdispersion 2:**

In einem 4 l Reaktionsgefäß mit Rückflußkühler und einem Zulaufgefäß werden 720 g der Polyesterdispersion 1 eingewogen und unter Rühren nacheinander 126 g Butylacrylat und 119 g vollentsalztes Wasser zugegeben. Danach werden eine Mischung aus 0,38 g Ascorbinsäure und 13,1 g vollentsalztem Wasser und eine Mischung aus 0,0025 g Eisen II-Sulfat und 12,6 g vollentsalztem Wasser zugegeben.

Anschließend wird eine Mischung aus 0,63 g tert.-Butylhydroperoxid (70 %ig in Wasser) und 14,4 g vollentsalztem Wasser innerhalb von 10 Minuten zudosiert und die Polymerisation gestartet. Die Temperatur steigt bis 39 °C. Eine Stunde nach Erreichen der Maximaltemperatur der Polymerisation werden bei 30 °C nacheinander 195,3 g Butylacrylat und 56,7 g Ethylenglykoldimethacrylat zugegeben. Danach werden eine Mischung aus 0,76 g Ascorbinsäure und 26,2 g vollentsalztem Wasser und eine Mischung aus 0,005 g Eisen II-Sulfat und 25,6 g vollentsalztem Wasser zugegeben. Anschließend wird eine Mischung aus 1,26 g tert.-Butylhydroperoxid (70 %ig in Wasser) und 28,8 g vollentsalztem Wasser innerhalb von 10 Minuten zudosiert und die Polymerisation gestartet. Die Temperatur steigt bis 59 °C. Eine Stunde nach Erreichen der Maximaltemperatur der Polymerisation wird bei 35 °C eine Mischung aus 0,38 g Ascorbinsäure und 20 g vollentsalztem Wasser in 5 Minuten zudosiert.

Nach 15 Minuten werden 303 g eines handelsüblichen Melaminharzes (Cymel® 327 der Firma Dyno Cytec) und 641 g vollentsalztes Wasser dem Ansatz zugegeben. Es wird auf 80 °C erhitzt und bei 80 °C 5 Stunden kondensiert. Danach wird abgekühlt und 6,4 g Dimethylethanolamin zugegeben.

Man erhält eine stabile Dispersion mit einem Festkörpergehalt von 34 % (60 Minuten bei 120 °C). Eine Probe dieser Dispersion mit Tetrahydrofuran verdünnt zeigt eine starke Trübung.

**Polymerdispersion 3:**

In einem 4 l Reaktionsgefäß mit Rückflußkühler und einem Zulaufgefäß werden 720 g der Polyesterdispersion 1 eingewogen und unter Rühren nacheinander 252,8 g Butylacrylat, 7,8 g Hexandioldiacrylat und 240 g vollentsalztes Wasser zugegeben. Danach werden eine Mischung aus 0,79 g Ascorbinsäure und 23,5 g vollentsalztem Wasser und eine Mischung aus 0,0034 g Eisen II-Sulfat und 26,1 g vollentsalztem Wasser zugegeben.

Anschließend wird eine Mischung aus 1,87 g tert.-Butylhydroperoxid (70 %ig in Wasser) und 29,5 g vollentsalztem Wasser innerhalb von 10 Minuten zudosiert und die Polymerisation gestartet. Die Temperatur steigt bis 46 °C. Eine Stunde nach Erreichen der Maximaltemperatur der Polymerisation werden bei 30 °C nacheinander 221 g Butylacrylat, 39,1 g Ethylenglykoldimethacrylat und 310 g vollentsalztes Wasser zugegeben. Danach werden eine Mischung aus 0,79 g Ascorbinsäure und 23,5 g vollentsalztem Wasser und eine Mischung aus 0,0034 g Eisen II-Sulfat und 26,1 g vollentsalztem Wasser zugegeben. Anschließend wird eine Mischung aus 1,87 g tert.-Butylhydroperoxid (70 %ig in Wasser) und 29,5 g vollentsalztem Wasser innerhalb von 10 Minuten zudosiert und die Polymerisation gestartet. Die Temperatur steigt bis 44 °C.

Eine Stunde nach Erreichen der Maximaltemperatur der Polymerisation wird bei 35 °C eine Mischung aus 0,4 g Ascorbinsäure und 12 g vollentsalztem Wasser in 5 Minuten zudosiert.

Nach 15 Minuten werden 31,1 g eines handelsüblichen Melaminharzes (Cymel® 327 der Firma Dyno Cytec) und 290 g vollentsalztes Wasser dem Ansatz zugegeben. Es wird auf 80 °C erhitzt und bei 80 °C 5 Stunden kondensiert. Danach wird abgekühlt und 6,4 g Dimethylethanolamin zugegeben.

Man erhält eine stabile Dispersion mit einem Festkörpergehalt von 31 % (60 Minuten bei 120 °C). Eine Probe dieser Dispersion mit Tetrahydrofuran verdünnt zeigt eine starke Trübung.

**Polymerdispersion 4:**

In einem 4 l Reaktionsgefäß mit Rückflußkühler und einem Zulaufgefäß werden 720 g der Polyesterdispersion 1 eingewogen und unter Rühren nacheinander 453,6 g Butylacrylat und 446 g vollentsalztes Wasser zugegeben. Danach werden eine Mischung aus 1,37 g Ascorbinsäure und 47,2 g vollentsalztem Wasser und eine Mischung aus 0,009 g Eisen II-Sulfat und 45,4 g vollentsalztem Wasser zugegeben.

Anschließend wird eine Mischung aus 2,27 g tert.-Butylhydroperoxid (70 %ig in Wasser) und 51,8 g vollentsalztem Wasser innerhalb von 10 Minuten zudosiert und die Polymerisation gestartet. Die Temperatur steigt bis 58 °C. Eine Stunde nach Erreichen der Maximaltemperatur der Polymerisation werden bei 30 °C nacheinander 50,4 g Methylmethacrylat und 240 g vollentsalztes Wasser zugegeben. Danach werden eine Mischung aus 0,15 g Ascorbinsäure und 5,2 g vollentsalztem Wasser und eine Mischung aus 0,001 g Eisen II-Sulfat und 5 g vollentsalztem Wasser zugegeben. Anschließend wird eine Mischung aus 0,25 g tert.-Butylhydroperoxid (70 %ig in Wasser) und 5,8 g vollentsalztem Wasser innerhalb von 10 Minuten zudosiert und die Polymerisation gestartet. Die Temperatur steigt bis 34 °C. Eine Stunde nach Erreichen der Maximaltemperatur der Polymerisation wird bei 35 °C eine Mischung aus 0,4 g Ascorbinsäure und 12 g vollentsalztem Wasser in 5 Minuten zudosiert.

Nach 15 Minuten werden 120 g eines handelsüblichen Melaminharzes (Cymel® der Firma Dyno Cytec) und 334 g vollentsalztes Wasser dem Ansatz zugegeben. Es wird auf 80 °C erhitzt und bei 80 °C 5 Stunden kondensiert. Danach wird abgekühlt und 6,4 g Dimethylethanolamin zugegeben.

Man erhält eine stabile Dispersion mit einem Festkörpergehalt von 30 % (60 Minuten bei 120 °C). Eine Probe dieser Dispersion mit Tetrahydrofuran verdünnt zeigt eine starke Trübung.

**Polymerdispersion 5:**

In einem 4 l Reaktionsgefäß mit Rückflußkühler werden 645 g Polyurethandispersion 2 eingewogen und unter Rühren nacheinander 253 g Butylacrylat, 5,3 g Allylmethacrylat, 1 g Dimethylethanolamin und 611 g vollentsalztes Wasser zugegeben. Danach werden eine Mischung aus 0,8 g Ascorbinsäure und 26,9 g vollentsalztem Wasser und eine Mischung aus 0,0034 g Eisen II-Sulfat und 25,5 g vollentsalztem Wasser zugegeben. Anschließend wird eine Mischung aus 1,3 g Tert.-Butylhydroperoxid (70 %ig in Wasser) und 29,4 g vollentsalztem Wasser innerhalb von 10 Minuten zudosiert und die Polymerisation gestartet. Die Temperatur steigt bis 35 °C.

Eine Stunde nach Erreichen der Maximaltemperatur der Polymerisation werden bei 35 °C 250 g Butylacrylat und 7,8 g Ethylenglykoldimethacrylat zugegeben. Danach werden eine Mischung aus 0,8 g Ascorbinsäure und 26,9 g vollentsalztem Wasser und eine Mischung aus 0,0034 g Eisen II-Sulfat und 25,5 g vollentsalztem Wasser zugegeben. Anschließend wird eine Mischung aus 1,3 g Tert.-Butylhydroperoxid (70 %ig in Wasser) und 29,4 g vollentsalztem Wasser innerhalb von 10 Minuten zudosiert und die Polymerisation gestartet. Die Temperatur steigt bis 56 °C.

Nach 15 Minuten werden 122,9 g eines handelsüblichen Melaminharzes (Cymel® 327 der Firma Dyno Cytec) und 470 g vollentsalztes Wasser dem Ansatz zugegeben. Es wird auf 80 °C erhitzt und bei dieser Temperatur 4 Stunden kondensiert. Danach wird abgekühlt und 5,8 g Dimethylethanolamin zugegeben.

Man erhält eine stabile Dispersion mit einem Festkörpergehalt von 33 % (60 Minuten bei 120 °C). Eine Probe dieser Dispersion mit Tetrahydrofuran verdünnt zeigt eine starke Trübung.

**Polymerdispersion 6:**

In einem 2 l Reaktionsgefäß mit Rückflußkühler werden 233 g Acrylatdispersion 1 eingewogen und unter Rühren nacheinander 200 g Butylacrylat, 5,8 g Dimethylethanolamin und 284 g vollentsalztes Wasser zugegeben. Danach werden eine Mischung aus 0,6 g Ascorbinsäure und 22 g vollentsalztem Wasser und eine Mischung aus 0,008 g Eisen II-Sulfat und 33 g vollentsalztem Wasser zugegeben. Anschließend wird eine Mischung aus 1,5 g Tert.-Butylhydroperoxid (70 %ig in Wasser) und 24 g vollentsalztem Wasser innerhalb von 10 Minuten zudosiert und die Polymerisation gestartet. Die Temperatur steigt bis 55 °C.

Eine Stunde nach Erreichen der Maximaltempertaur der Polymerisation werden bei 35 °C 194 g Butylacrylat und 6 g Allylmethacrylat zugegeben. Danach werden eine Mischung aus 0,6 g Ascorbinsäure und 22 g vollentsaltzem Wasser und eine Mischung aus 0,008 g Eisen II-sulfat und 33 g vollentsalztem Wasser zugegeben. Anschließend wird eine Mischung aus 1,5 g Tert.-Butylhydroperoxid (70 %ig in Wasser) und 24 g vollentsalztem Wasser innerhalb von 10 Minuten zudosiert und die Polymerisation gestartet. Die Temperatur steigt bis 67 °C.

Nach 15 Minuten werden 53,5 g eines handelsüblichen Melaminharzes (Cymel® 327 der Firma Dyno Cytec) und 64 g vollentsalztes Wasser dem Ansatz zugegeben. Es wird auf 80 °C erhitzt und bei dieser Temperatur 4 Stunden kondensiert. Danach wird abgekühlt und eine Mischung aus 9,9 g Dimethylethanolamin und 90 g vollentsalztem Wasser zugegeben.

Man erhält eine stabile Dispersion mit einem Festkörpergehalt von 35 % (60 Minuten bei 120 °C). Eine Probe dieser Dispersion mit Tetrahydrofuran verdünnt zeigt eine starke Trübung.

**Verwendung der erfindungsgemäßen Polymere**

**Anwendungsbeispiel 1:**

Zur Herstellung eines Metallic-Wasserbasislackes werden 107,1 g der Polyurethandispersion 1 und 288,5 g der erfindungsgemäßen Polymerdispersion 1, eine Mischung aus 50 g Polyesterdispersion 2, 0,4 g Dimethylethanolamin und 35 g vollentsalztem Wasser, 16,6 g eines handelsüblichen Melaminharzes (Cymel® 327 der Firma Dyno Cytec), 42,9 g einer handelsüblichen Aluminiumbronze, vorher angeteigt in 56,2 g Butylglykol und 31,6 g n-Butanol und einer Mischung aus 24,6 g eines handelsüblichen Acrylatverdickers (Latekoll® D der Firma BASF) und 46 g vollentsalztem Wasser zu einem Lack verarbeitet. Mit Dimethylethanolamin wird der pH-Wert auf 8,00 bis 8,30 und mit vollentsalztem Wasser auf eine Viskosität von 101 mPa·s eingestellt (gemessen bei 1000 s$^{-1}$).

**Anwendungsbeispiel 2:**

Es wird so verfahren wie in Beispiel 1. Jedoch werden die 288,5 g Polymerdispersion 1 ausgetauscht durch 220,6 g der erfindungsgemäßen Polymerdispersion 2.

**Anwendungsbeispiel 3:**

Es wird so verfahren wie in Beispiel 1. Jedoch werden die 288,5 g Polymerdispersion 1 ausgetauscht durch 241,9 g der erfindungsgemäßen Polymerdispersion 3.

**Anwendungsbeispiel 4:**

Es wird so verfahren wie in Beispiel 1. Jedoch werden die 288,5 g Polymerdispersion 1 ausgetauscht durch 250 g der erfindungsgemäßen Polymerdispersion 4.

**Anwendungsbeispiel 5:**

Es wird so verfahren wie in Beispiel 1. Jedoch werden die 288,5 g Polymerdispersion 1 ausgetauscht durch 234,4 g Polymerdispersion 5.

**Anwendungsbeispiel 6:**

Es wird so verfahren wie in Beispiel 1. Jedoch werden die 288,5 g Polymerdispersion 1 ausgetauscht durch 214,3 g Polymerdispersion 6.

**Vergleichsbeispiel 1:**

Es wird so verfahren wie in Beispiel 1. Jedoch werden die 288,5 g Polymerdispersion 1 ausgetauscht durch 250 g einer Microgeldispersion, hergestellt entsprechend dem Beispiel 4b) aus der EP-0 808 333 B1.

**Vergleichsbeispiel 2:**

Es wird so verfahren wie in Lackbeispiel 1. Jedoch werden die 288,5 g Polymerdispersion 1 ausgetauscht durch 125 g einer Microgeldispersion, hergestellt entsprechend dem Beispiel 4b) aus der EP-0 808 333 und 110,3 g einer Microgeldispersion, hergestellt aus dem Beispiel 9 aus der DE 39 40 316.

**Vergleichsbeispiel 3**

Zu der in Beispiel 4b aus EP-0 808 333 B1 angegebenen Menge an hergestellter Microgeldispersion werden anschließend 492 g eines handelsüblichen Melaminharzes (Cymel® 327 der Firma Dyno Cytec) und 500 g vollentsalztes Wasser zugegeben und der Ansatz auf 80 °C aufgeheizt. Bei Erreichen der Temperatur von 80 °C koaguliert der Ansatz und ist so einer weiteren Verarbeitung nicht zugänglich

**Prüfung der Haftung unter Pulver/Pulverslurry:**

Die nach den zuvor beschriebenen Anwendungs- und Vergleichsbeispielen hergestellten wäßrigen Basislak-

ke werden jeweils auf zwei mit einem handelsüblichen Elektrotauchlack (Enviro Prime der Fa. PPG) und einem handelsüblichen Füller lackierte Stahlbleche mit einer Größe von 10 x 20 cm so gespritzt, daß Lackfilme mit einer Trockenfilmdicke von 12 - 15 µm erhalten werden. Die applizierten Naßfilme werden nach einer Vortrockenzeit von 5 min bei 60 °C jeweils mit einem handelsüblichen Pulverklarlack (PCC 10106 der Fa. PPG, Trockenschichtdicke 65 µm) und einer Pulverklarlackslurry (hergestellt nach dem Beispiel aus der DE 196 13 547 C2, Trockenschichtdicke 40 µm) lackiert und nach einer Vortrocknung von 10 Minuten bei 60 °C anschließend 30 Minuten bei 140 °C eingebrannt. Die fertigen Lacke werden entsprechend der EN/ISO-Vorschrift 2409 (mittels Gitterschnitt) untersucht. Die Ergebnisse dieser Untersuchungen sind in der folgenden Tabelle angegeben. Hierbei bedeuten "Gt 0" sehr gut und "Gt 5" völlig unbrauchbar. Der von der Automobilindustrie akzeptierte Grenzwert liegt bei Gt 1.

**Prüfung der Neigung zum "mud-cracking" unter Pulverslurry:**

Die nach den zuvor beschriebenen Anwendungs- und Vergleichsbeispielen hergestellten wäßrigen Basislacke werden jeweils auf ein mit einem handelsüblichen Elektrotauchlack (Enviro Prime der Firma PPG) und einem handelsüblichen Füller lackiertes Stahlblech mit einer Größe von 20 x 50 cm so gespritzt, daß eine Trockenschichtdicke von 15 µm erhalten wird. Anschließend wird mit einer Pulverklarlackslurry (hergestellt nach dem Beispiel aus der DE 196 13 547 C2, Trockenschichtdicke 45 µm) lackiert. Nach einer Vortrocknung von 10 Minuten bei 50 °C werden die Schichten anschließend 30 Minuten bei 150 °C eingebrannt.
Das Auftreten von "mud-cracking" wird visuell beurteilt.

**Prüfung der Laufsicherheit:**

Die nach den zuvor beschriebenen Anwendungs- und Vergleichsbeispielen hergestellten wäßrigen Basislacke werden mittels eines Spritzautomaten mit Druckluftzerstäubung auf eine senkrecht stehende Lochtafel mit einer keilförmig aufgebauten Trockenschichtdicke von 10 - 35 µm appliziert. Nach 3 Minuten Ablüften werden die Bleche senkrecht stehend 5 Minuten bei 80 °C vorgetrocknet und anschließend 10 Minuten bei 130 °C eingebrannt. Es wird die Schichtdicke des Basislackes angegeben, bei der die ersten Läufer beobachtet werden.
In der nachfolgenden Tabelle I sind die Ergebnisse der einzelnen Tests aufgeführt.

Tabelle I

| Lackbeispiele | Viskosität (bei 1000 s$^{-1}$) | Haftung unter Slurry | mud-cracking | Haftung unter Pulver | Läufergrenze |
|---|---|---|---|---|---|
| Beispiel 1 | 101 mPas | Gt 0 - 1 | nein | Gt 0 - 1 | 30 µm |
| Beispiel 2 | 99 mPas | Gt 0 -1 | nein | Gt 0 - 1 | 29 µm |
| Beispiel 3 | 103 mPas | Gt 0 - 1 | nein | Gt 0 - 1 | 32 µm |
| Beispiel 4 | 103 m Pas | Gt 0 | nein | Gt 0 | 27 µm |
| Beispiel 5 | 104 mPas | Gt 0 - 1 | nein | Gt 0 - 1 | 28 µm |
| Beispiel 6 | 106 m Pas | Gt 0 - 1 | nein | Gt 0 - 1 | 26 µm |
| Vergleichsbsp. 1 | 101 mPas | Gt 2 | nein | Gt 2 | 14 µm |
| Vergleichsbsp. 2 | 98 mPas | Gt 5 | ja | Gt 5 | 18 µm |

Die Tabelle I zeigt deutlich, daß durch den Einsatz der erfindungsgemäßen Polymere Lackierungen erhalten werden, die sich durch eine sehr gute Haftung unter Klarlacken auf Basis von Pulver oder Pulverslurry auszeichnen. Ferner zeigen die erfindungsgemäßen Beispiele eine sehr gute Aluminiumorientierung sowie einen ausgezeichneten Decklackstand.

**Patentansprüche**

**1.**  In wäßriger Phase dispergierte Polymermikroteilchen, deren Äußeres vollständig vernetzt ist, erhältlich durch ein mehrstufiges Polymerisationsverfahren, bei dem

a) in einem ersten Schritt eine Polymerisation in wäßriger Phase einer Moriomerenmischung aus

i) 7,5 bis 93 Gew.-% mindestens einer ethylenisch monofunktionellen Verbindung;
ii) 0,3 bis 47,5 Gew.-% mindestens einer ethylenisch di- oder multifunktionellen Verbindung;

in Gegenwart eines Polymers, ausgewählt aus einem

- Polyesterpolyol mit einem zahlenmittleren Molekulargewicht von 500 bis 10.000, einer Säurezahl zwischen 22 und 224 und einer OH-Zahl zwischen 60 bis 400 durchgerührt wird;
- Polyurethan mit einem zahlenmittleren Molekulargewicht von 500 bis 20.000, einer Säurezahl zwischen 25 und 150 und einer OH-Zahl zwischen 50 bis 350; wobei das Polyurethan im statistischen Mittel mindestens eine, aus einem Polyesterpolyol stammende freie Carboxylgruppe pro Molekül aufweist; und/oder
- Polyacrylat mit einem zahlenmittleren Molekulargewicht von 2.000 bis 100.000, einer Säurezahl zwischen 25 und 300 und einer OH-Zahl zwischen 50 bis 250;

b) in einem folgenden Schritt eine Umsetzung des aus Schritt a) erhaltenen Produkts mit

iii) 5 bis 85 Gew.-% mindestens einer ethylenisch monofunktionellen Verbindung;

durchgeführt wird, wobei die Summe der Gewichtsanteile der Komponenten (i) bis (iii) 100 Gew.-% beträgt;

gefolgt von einer Umsetzung des aus Schritt b) erhaltenen Produkts mit einem Vernetzer.

2. In wäßriger Phase dispergierte Polymermikroteilchen, deren Äußeres vollständig vernetzt ist, erhältlich durch ein mehrstufiges Polymerisationsverfahren, bei dem

a) in einem ersten Schritt eine Polymerisation in wäßriger Phase einer Monomerenmischung aus

i) 15 bis 95 Gew.-% mindestens einer ethylenisch monofunktionellen Verbindung;

in Gegenwart eines Polymers, ausgewählt aus einem

- Polyesterpolyol mit einem zahlenmittleren Molekulargewicht von 500 bis 10.000, einer Säurezahl zwischen 22 und 224 und einer OH-Zahl zwischen 60 bis 400 durchgeführt wird;
- Polyurethan mit einem zahlenmittleren Molekulargewicht von 500 bis 20.000, einer Säurezahl zwischen 25 und 150 und einer OH-Zahl zwischen 50 bis 350; wobei das Polyurethan im statistischen Mittel mindestens eine, aus einem Polyesterpolyol stammende freie Carboxylgruppe pro Molekül aufweist; und/oder
- Polyacrylat mit einem zahlenmittleren Molekulargewicht von 2.000 bis 100.000, einer Säurezahl zwischen 25 und 300 und einer OH-Zahl zwischen 50 bis 250;

b) in einem folgenden Schritt eine Umsetzung des aus Schritt a) erhaltenen Produkts mit

ii) 2,5 bis 83 Gew.-% mindestens einer ethylenisch monofunktionellen Verbindung;
iii) 0,1 bis 42,5 Gew.-% mindestens einer ethylenisch di- oder multifunktionellen Verbindung;

durchgeführt wird, wobei die Summe der Gewichtsanteile der Komponenten (i) bis (iii) 100 Gew.-% beträgt;

gefolgt von einer Umsetzung des aus Schritt b) erhaltenen Produkts mit einem Vernetzer.

3. In wäßriger Phase dispergierte Polymermikroteilchen, deren Äußeres vollständig vernetzt ist, erhältlich durch ein mehrstufiges Polymerisationsverfahren, bei dem

a) in einem ersten Schritt eine Polymerisation in wäßriger Phase einer Monomerenmischung aus

i) 7,5 bis 93 Gew.-% mindestens einer ethylenisch monofunktionellen Verbindung;
ii) 0,3 bis 47,5 Gew.-% mindestens einer ethylenisch di- oder multifunktionellen Verbindung;

in Gegenwart eines Polymers, ausgewählt aus einem

- Polyesterpolyol mit einem zahlenmittleren Molekulargewicht von 500 bis 10.000, einer Säurezahl zwischen 22 und 224 und einer OH-Zahl zwischen 60 bis 400 durchgeführt wird;

- Polyurethan mit einem zahlenmittleren Molekulargewicht von 500 bis 20.000, einer Säurezahl zwischen 25 und 150 und einer OH-Zahl zwischen 50 bis 350; wobei das Polyurethan im statistischen Mittel mindestens eine, aus einem Polyesterpolyol stammende freie Carboxylgruppe pro Molekül aufweist; und/oder
- Polyacrylat mit einem zahlenmittleren Molekulargewicht von 2.000 bis 100.000, einer Säurezahl zwischen 25 und 300 und einer OH-Zahl zwischen 50 bis 250;

b) in einem folgenden Schritt eine Umsetzung des aus Schritt a) erhaltenen Produkts mit

iii) 2,5 bis 83 Gew.-% mindestens einer ethylenisch monofunktionellen Verbindung;
iv) 0,1 bis 42,5 Gew.-% mindestens einer ethylenisch di- oder multifunktionellen Verbindung;

durchgeführt wird, wobei die Summe der Gewichtsanteile der Komponenten (i) bis (iv) 100 Gew.-% beträgt;

gefolgt von einer Umsetzung des aus Schritt b) erhaltenen Produkts mit einem Vernetzer.

**4.** In wäßriger Phase dispergierte Polymermikroteilchen, deren Äußeres vollständig vernetzt ist, erhältlich durch ein mehrstufiges Polymerisationsverfahren, bei dem

a) in einem ersten Schritt eine Polymerisation in wäßriger Phase einer Monomerenmischung aus

i) 15 bis 95 Gew.-% mindestens einer ethylenisch monofunktionellen Verbindung;

in Gegenwart eines Polymers, ausgewählt aus einem

- Polyesterpolyol mit einem zahlenmittleren Molekulargewicht von 500 bis 10.000, einer Säurezahl zwischen 22 und 224 und einer OH-Zahl zwischen 60 bis 400 durchgeführt wird;
- Polyurethan mit einem zahlenmittleren Molekulargewicht von 500 bis 20.000, einer Säurezahl zwischen 25 und 150 und einer OH-Zahl zwischen 50 bis 350; wobei das Polyurethan im statistischen Mittel mindestens eine, aus einem Polyesterpolyol stammende freie Carboxylgruppe pro Molekül aufweist; und/oder
- Polyacrylat mit einem zahlenmittleren Molekulargewicht von 2.000 bis 100.000, einer Säurezahl zwischen 25 und 300 und einer OH-Zahl zwischen 50 bis 250;

b) in einem folgenden Schritt eine Umsetzung des aus Schritt a) erhaltenen Produkts mit

ii) 5 bis 85 Gew.-% mindestens einer ethylenisch monofunktionellen Verbindung;

durchgeführt wird, wobei die Summe der Gewichtsanteile der Komponenten (i) bis (ii) 100 Gew.-% beträgt;

gefolgt von einer Umsetzung des aus Schritt b) erhaltenen Produkts mit einem Vernetzer.

**5.** In wäßriger Phase dispergierte Polymermikroteilchen, deren Äußeres vollständig vernetzt ist, nach Anspruch 3, **dadurch gekennzeichnet, daß** die ethylenisch di- oder multifunktionelle Verbindung in den Schritten a) und b) gleich ist.

**6.** In wäßriger Phase dispergierte Polymermikroteilchen, deren Äußeres vollständig vernetzt ist, nach Anspruch 3, **dadurch gekennzeichnet, daß** die ethylenisch di- oder multifunktionelle Verbindung in den Schritten a) und b) verschieden ist.

**7.** In wäßriger Phase dispergierte Polymermikroteilchen, deren Äußeres vollständig vernetzt ist, nach einem der vorhergehenden Ansprüche, **dadurch gekennzeichnet, daß** die ethylenisch monofunktionelle Verbindung in den Schritten a) und b) gleich ist.

**8.** In wäßriger Phase dispergierte Polymermikroteilchen, deren Äußeres vollständig vernetzt ist, nach einem der vorhergehenden Ansprüche, **dadurch gekennzeichnet, daß** die ethylenisch monofunktionelle Verbindung in den Schritten a) und b) verschieden ist.

**9.** In wäßriger Phase dispergierte Polymermikroteilchen, deren Äußeres vollständig vernetzt ist, nach einem der vorhergehenden Ansprüche, **dadurch gekennzeichnet, daß** das aus einem Polyesterpolyol, Polyurethan und/oder Polyacrylat ausgewählte Polymer im statistischen Mittel mindestens eine freie Carboxylgruppe pro Molekül aufweist, die aus Trimellithsäure oder Trimellithsäureanhydrid stammt.

10. In wäßriger Phase dispergierte Polymermikroteilchen, deren Äußeres vollständig vernetzt ist, nach einem der vorhergehenden Ansprüche, **dadurch gekennzeichnet, daß** die ethylenisch monofunktionelle Verbindung ausgewählt ist aus der Gruppe der Alkylester oder Hydroxyalkylester der Acryl- oder Methacrylsäure.

11. In wäßriger Phase dispergierte Polymermikroteilchen, deren Äußeres vollständig vernetzt ist, nach Anspruch 10, **dadurch gekennzeichnet, daß** die ethylenisch monofunktionelle Verbindung Vinylacetat, Vinyltoluol, Styrol, Acrylamid oder ein Alkyl(meth)acrylat oder Hydroxyalkyl(meth)acrylat mit 1 bis 18 Kohlenstoffatomen im Alkylrest ist.

12. In wäßriger Phase dispergierte Polymermikroteilchen, deren Äußeres vollständig vernetzt ist, nach Anspruch 11, **dadurch gekennzeichnet, daß** das Alkyl(meth)acrylat ausgewählt ist aus der Gruppe von Laurylacrylat, Isobomyl (meth)acrylat, Cyclohexyl(meth)acrylat, tert.-Butylcylohexyl(meth)acrylat, Benzyl(meth)acrylat, Glycidyl(meth) acrylat und Trimethylcylohexyl(meth)acrylat.

13. In wäßriger Phase dispergierte Polymermikroteilchen, deren Äußeres vollständig vernetzt ist, nach Anspruch 11, **dadurch gekennzeichnet, daß** das Alkyl(meth)acrylat ausgewählt ist aus der Gruppe von $\alpha$-Ethylhexyl(meth) acrylat, Methyl(meth)acrylat, n-Butyl(meth)acrylat und tert.-Butyl(meth)acrylat.

14. In wäßriger Phase dispergierte Polymermikroteilchen, deren Äußeres vollständig vernetzt ist, nach Anspruch 11, **dadurch gekennzeichnet, daß** das Hydroxyalkyl(meth)acrylat ausgewählt ist aus der Gruppe von 2-Hydroxyethyl (meth)acrylat, 2-Hydroxypropyl(meth)acrylat, 2-Hydroxybutyl(meth)acrylat, Hexandiol-1,6-mono(meth)acrylat und 4-Hydroxybutyl(meth)acrylat.

15. In wäßriger Phase dispergierte Polymermikroteilchen, deren Äußeres vollständig vernetzt ist, nach einem der vorhergehenden Ansprüche, **dadurch gekennzeichnet, daß** die ethylenisch di- oder multifunktionelle Verbindung ausgewählt ist aus der Gruppe der Diacrylate, Triacrylate und/oder (Meth)acrylsäureestern von polyfunktionellen Alkoholen.

16. In wäßriger Phase dispergierte Polymermikroteilchen, deren Äußeres vollständig vernetzt ist, nach Anspruch 15, **dadurch gekennzeichnet, daß** die ethylenisch di- oder multifunktionelle Verbindung Allyl(meth)acrylat, Hexandioldi(meth)acrylat, Ethylenglykoldi(meth)acrylat, Neopentylglykoldi(meth)acrylat, Butandioldi(meth)acrylat oder Trimethylolpropantri(meth)acrylat ist.

17. In wäßriger Phase dispergierte Polymermikroteilchen, deren Äußeres vollständig vernetzt ist, nach einem der vorhergehenden Ansprüche, **dadurch gekennzeichnet, daß** die ethylenisch monofunktionelle Verbindung teilweise ein Polyester oder ein Polyurethan ist mit einer Säurezahl von weniger als 5, insbesondere weniger als 3, der bzw. das im statistischen Mittel bis zu eine polymerisierbare Doppelbindung pro Molekül enthält.

18. In wäßriger Phase dispergierte Polymermikroteilchen, deren Äußeres vollständig vernetzt ist, nach einem der vorhergehenden Ansprüche, **dadurch gekennzeichnet, daß** die ethylenisch di- oder multifunktionelle Verbindung teilweise ein Polyester oder ein Polyurethan ist mit einer Säurezahl von weniger als 5, insbesondere weniger als 3, der bzw. das im statistischen Mittel mindestens 1,5 polymerisierbare Doppelbindungen pro Molekül enthält.

19. In wäßriger Phase dispergierte Polymermikroteilchen, deren Äußeres vollständig vernetzt ist, nach einem der vorhergehenden Ansprüche, **dadurch gekennzeichnet, daß** das im Schritt a) während der Polymerisation verwendete

- Polyesterpolyol ein zahlenmittleres Molekulargewicht zwischen 700 und 5.000, besonders bevorzugt zwischen 750 und 2.000; eine Säurezahl zwischen 35 und 150, besonders bevorzugt zwischen 40 und 120; und eine OH-Zahl zwischen 150 und 300, besonders bevorzugt zwischen 220 und 280;
- Polyurethan ein zahlenmittleres Molekulargewicht zwischen 700 und 5.000, besonders bevorzugt zwischen 750 und 2.500; eine Säurezahl zwischen 30 und 120, besonders bevorzugt zwischen 40 und 80; und eine OH-Zahl zwischen 150 und 300, besonders bevorzugt zwischen 220 und 280; und/oder
- das Polyacrylat ein zahlenmittleres Molekulargewicht zwischen 2.500 und 20.000, besonders bevorzugt zwischen 4.000 und 10.000; eine Säurezahl zwischen 35 und 150, besonders bevorzugt zwischen 40 und 125;

und eine OH-Zahl zwischen 100 und 250, besonders bevorzugt zwischen 150 und 200; hat.

20. In wäßriger Phase dispergierte Polymermikroteilchen, deren Äußeres vollständig vernetzt ist, nach einem der vorhergehenden Ansprüche, **dadurch gekennzeichnet, daß** das im Schritt a) während der Polymerisation verwendete Polyesterpolyol keine polymerisierbare Doppelbindung aufweist und erhältlich ist aus der Umsetzung mindestens einer Polycarbonsäure ohne polymerisierbare Doppelbindung mit mindestens einem Polyol ohne polymerisierbare Doppelbindung.

21. In wäßriger Phase dispergierte Polymermikroteilchen, deren Äußeres vollständig vernetzt ist, nach einem der Ansprüche 1 bis 19, **dadurch gekennzeichnet, daß** das Polyesterpolyol im statistischen Mittel mindestens eine polymerisierbare Doppelbindung pro Molekül aufweist und erhältlich ist aus der Umsetzung

   i) mindestens einer Polycarbonsäure ohne polymerisierbare Doppelbindung mit mindestens einem Polyol mit mindestens einer polymerisierbaren Doppelbindung;
   ii) mindestens einer Polycarbonsäure mit mindestens einer polymerisierbaren Doppelbindung mit mindestens einem Polyol ohne polymerisierbare Doppelbindung; oder
   iii) mindestens einer Polycarbonsäure mit mindestens einer polymerisierbaren Doppelbindung mit mindestens einem Polyol mit mindestens einer polymerisierbaren Doppelbindung.

22. In wäßriger Phase dispergierte Polymermikroteilchen, deren Äußeres vollständig vernetzt ist, nach Anspruch 20 oder 21, **dadurch gekennzeichnet, daß** die Polycarbonsäure ohne polymerisierbare Doppelbindung ausgewählt ist aus der Gruppe von

   • Bernsteinsäure, Glutarsäure, Adipinsäure, Azelainsäure, Terephthalsäure, Phthalsäure, Isophthalsäure, Endomethylentetrahydrophthalsäure, 1,2-Cyclohexandicarbonsäure, 1,3-Cyclohexandicarbonsäure, 1,4-Cyclohexandicarbonsäure, Dodecandisäure, Dodecandicarbonsäure;
   • dimeren und polymeren Fettsäuren sowie Trimellithsäure;

   sowie den möglichen Anhydriden hiervon.

23. In wäßriger Phase dispergierte Polymermikroteilchen, deren Äußeres vollständig vernetzt ist, nach einem der vorhergehenden Ansprüche 20 bis 22, **dadurch gekennzeichnet, daß** das Polyol ohne polymerisierbare Doppelbindung ausgewählt ist aus der Gruppe von

   • Ethylenglykol, Diethylenglykol, Triethylenglykol, Tetraethylenglykol, Hexaethylenglykol, 1,2-Propylenglykol, 1,3-Propylenglykol, 1,4-Butandiol, 1,5-Pentandiol, 1,6-Hexandiol, 2,2-Dimethylpropandiol, 2,2,4-Trimethylpentandiol, 1,3-Dimethylolcyclohexan, 1,4-Dimethylolcyclohexan, Hydroxypivalinsäureneopentylglykolmonoester, Dimethylolpropionsäure und perhydriertem Bisphenol A;
   • Trimethylolpropan und Glycerin; sowie
   • Pentaerythrit, Dipentaerythrit und Di-(Trimethylolpropan).

24. In wäßriger Phase dispergierte Polymermikroteilchen, deren Äußeres vollständig vernetzt ist, nach einem der Ansprüche 21 bis 23, **dadurch gekennzeichnet, daß** die mindestens eine polymerisierbare Doppelbindung aufweisende Polycarbonsäure ausgewählt ist aus der Gruppe von Maleinsäure, Fumarsäure, Itaconsäure, Citraconsäure und Aconitsäure sowie den möglichen Anhydriden hiervon.

25. In wäßriger Phase dispergierte Polymermikroteilchen, deren Äußeres vollständig vernetzt ist, nach einem der Ansprüche 21 bis 24, **dadurch gekennzeichnet, daß** das mindestens eine polymerisierbare Doppelbindung aufweisende Polyol ausgewählt ist aus der Gruppe

   • von 1,4-Butendiol, Dimethylolpropionsäureallylester, Dimethylolpropionsäurevinylester, Trimethylolpropanmonoallylether, Glycerinmonoallylether;
   • der Anlagerungsprodukte aus Allylglycidylether oder Glycidyl(meth)acrylat an einen eine Carboxylgruppe aufweisenden Polyester; sowie
   • der Anlagerungsprodukte aus Allylglycidylether oder Glycidyl(meth)acrylat an Dimethylolpropionsäure.

26. In wäßriger Phase dispergierte Polymermikroteilchen, deren Äußeres vollständig vernetzt ist, nach einem der Ansprüche 19 bis 25, **dadurch gekennzeichnet, daß** das Polyesterpolyol durch mindestens eine Monocarbonsäure modifiziert ist, ausgewählt aus der Gruppe der gesättigten oder ungesättigten, isolierten oder konjugierten, linearen oder verzweigten Fettsäuren sowie der Benzoesäure oder Crotonsäure.

27. In wäßriger Phase dispergierte Polymermikroteilchen, deren Äußeres vollständig vernetzt ist, nach Anspruch 26, **dadurch gekennzeichnet, daß** die Fettsäure 5 bis 22 Kohlenstoffatome aufweist und insbesondere Linolsäure, Ölsäure, Sojafettsäure, Isononansäure oder Isostearinsäure ist.

28. In wäßriger Phase dispergierte Polymermikroteilchen, deren Äußeres vollständig vernetzt ist, nach einem der vorhergehenden Ansprüche, **dadurch gekennzeichnet, daß** der Vernetzer ein Aminoplastharz oder ein Polyisocyanat ist.

29. In wäßriger Phase dispergierte Polymermikroteilchen, deren Äußeres vollständig vernetzt ist, nach Anspruch 28, **dadurch gekennzeichnet, daß** das Aminoplastharz ein Melaminharz ist.

30. In wäßriger Phase dispergierte Polymermikroteilchen, deren Äußeres vollständig vernetzt ist, nach Anspruch 28, **dadurch gekennzeichnet, daß** das Polyisocyanat ausgewählt ist aus der Gruppe von 1,3-Bis(1-isocyanato-1-methylethyl)benzol (TMXDI, m-Tetramethylxylylendiisocyanat), (4,4'-Dicyclohexylmethandiisocyanat, Desmodur W), Isophorondiisocyanat (IPDI, 3,5,5-Trimethyl-1-isocyanato-3-isocyanatomethylcyclohexan) und 2,4,6-Trioxo-1,3,5-tris(6-isocyanatohexyl)hexahydro-1,3,5-triazin (Desmodur N3300).

31. In wäßriger Phase dispergierte Polymermikroteilchen, deren Äußeres vollständig vernetzt ist, nach Anspruch 28 oder 30, **dadurch gekennzeichnet, daß** das Polyisocyanat hydrophil modifiziert ist.

32. In wäßriger Phase dispergierte Polymermikroteilchen, deren Äußeres vollständig vernetzt ist, nach einem der vorhergehenden Ansprüche, **dadurch gekennzeichnet, daß** der Neutralisationsgrad des Polyesterpolyols während des gesamten Herstellungsvorgangs zwischen 30 und 100 %, insbesondere zwischen 50 und 80 %, liegt.

33. In wäßriger Phase dispergierte Polymermikroteilchen, deren Äußeres vollständig vernetzt ist, nach einem der vorhergehenden Ansprüche, **dadurch gekennzeichnet, daß** die Polymerisation entsprechend Schritt a) als Emulsionspolymerisation unter Verwendung eines Düsenstrahldispergators oder eines Wasserstrahlemulgators durchgeführt wird.

34. In wäßriger Phase dispergierte Polymermikroteilchen, deren Äußeres vollständig vernetzt ist, nach einem der vorhergehenden Ansprüche, **dadurch gekennzeichnet, daß** die Polymerisation entsprechend Schritt a) als Redoxpolymerisation unter Verwendung von Ascorbinsäure, Eisen(II)-sulfat und mindestens eines Hydroperoxids durchgeführt wird.

35. In wäßriger Phase dispergierte Polymermikroteilchen, deren Äußeres vollständig vernetzt ist, nach einem der vorhergehenden Ansprüche, **dadurch gekennzeichnet, daß** es in eine wasserfreie Form überführt wird.

36. Verwendung von in wäßriger Phase dispergierter Polymermikroteilchen nach einem der vorhergehenden Ansprüche für wäßrige oder lösemittelhaltige Beschichtungszusammensetzungen.

37. Verwendung nach Anspruch 36 für wäßrige oder lösemittelhaltige Basislacke, Effektbasislacke oder Klarlacke in der Automobilindustrie.

38. Verwendung nach Anspruch 36 oder 37 für wäßrige oder lösemittelhaltige Pigmentzubereitungen.

**Claims**

1. Polymer microparticles which are dispersed in an aqueous phase and whose exterior is fully crosslinked, obtainable by a multi-stage polymerisation process in which

    a) in a first step a polymerisation is carried out, in the aqueous phase, of a monomer mixture of

        i) from 7.5 to 93 wt.% of at least one ethylenically monofunctional compound;
        ii) from 0.3 to 47.5 wt.% of at least one ethylenically di- or multi-functional compound;

in the presence of a polymer selected from

- a polyester polyol having a number-average molecular weight from 500 to 10,000, an acid number from 22 to 224 and an OH number from 60 to 400;
- a polyurethane having a number-average molecular weight from 500 to 20,000, an acid number from 25 to 150 and an OH number from 50 to 350; the polyurethane containing in the statistical mean at least one free carboxyl group originating from a polyester polyol per molecule; and/or
- a polyacrylate having a number-average molecular weight from 2000 to 100,000, an acid number from 25 to 300 and an OH number from 50 to 250;

b) in a following step, a reaction is carried out of the product obtained in step a) with

iii) from 5 to 85 wt.% of at least one ethylenically monofunctional compound;

the sum of the amounts by weight of components (i)
to (iii) being 100 wt.%;

followed by a reaction of the product obtained in step b) with a crosslinker.

2. Polymer microparticles which are dispersed in an aqueous phase and whose exterior is fully crosslinked, obtainable by a multi-stage polymerisation process in which

a) in a first step a polymerisation is carried out, in the aqueous phase, of a monomer mixture of

i) from 15 to 95 wt.% of at least one ethylenically monofunctional compound;

in the presence of a polymer selected from

- a polyester polyol having a number-average molecular weight from 500 to 10,000, an acid number from 22 to 224 and an OH number from 60 to 400;
- a polyurethane having a number-average molecular weight from 500 to 20,000, an acid number from 25 to 150 and an OH number from 50 to 350; the polyurethane containing in the statistical mean at least one free carboxyl group originating from a polyester polyol per molecule; and/or
- a polyacrylate having a number-average molecular weight from 2000 to 100,000, an acid number from 25 to 300 and an OH number from 50 to 250;

b) in a following step, a reaction is carried out of the product obtained in step a) with

ii) from 2.5 to 83 wt.% of at least one ethylenically monofunctional compound;
iii) from 0.1 to 42.5 wt.% of at least one ethylenically di- or multi-functional compound;

the sum of the amounts by weight of components (i) to (iii) being 100 wt.%;

followed by a reaction of the product obtained in step b) with a crosslinker.

3. Polymer microparticles which are dispersed in an aqueous phase and whose exterior is fully crosslinked, obtainable by a multi-stage polymerisation process in which

a) in a first step a polymerisation is carried out, in the aqueous phase, of a monomer mixture of

i) from 7.5 to 93 wt.% of at least one ethylenically monofunctional compound;
ii) from 0.3 to 47.5 wt.% of at least one ethylenically di- or multi-functional compound;

in the presence of a polymer selected from

- a polyester polyol having a number-average molecular weight from 500 to 10,000, an acid number from 22 to 224 and an OH number from 60 to 400;
- a polyurethane having a number-average molecular weight from 500 to 20,000, an acid number from 25 to 150 and an OH number from 50 to 350; the polyurethane containing in the statistical mean at least one free carboxyl group originating from a polyester polyol per molecule; and/or

- a polyacrylate having a number-average molecular weight from 2000 to 100,000, an acid number from 25 to 300 and an OH number from 50 to 250;

b) in a following step, a reaction is carried out of the product obtained in step a) with

iii) from 2.5 to 83 wt.% of at least one ethylenically monofunctional compound;
iv) from 0.1 to 42.5 wt.% of at least one ethylenically di- or multi-functional compound;

the sum of the amounts by weight of components (i) to (iv) being 100 wt.%;

followed by a reaction of the product obtained in step b) with a crosslinker.

4. Polymer microparticles which are dispersed in an aqueous phase and whose exterior is fully crosslinked, obtainable by a multi-stage polymerisation process in which

a) in a first step a polymerisation is carried out, in the aqueous phase, of a monomer mixture of

i) from 15 to 95 wt.% of at least one ethylenically monofunctional compound;

in the presence of a polymer selected from

- a polyester polyol having a number-average molecular weight from 500 to 10,000, an acid number from 22 to 224 and an OH number from 60 to 400;
- a polyurethane having a number-average molecular weight from 500 to 20,000, an acid number from 25 to 150 and an OH number from 50 to 350; the polyurethane containing in the statistical mean at least one free carboxyl group originating from a polyester polyol per molecule; and/or
- a polyacrylate having a number-average molecular weight from 2000 to 100,000, an acid number from 25 to 300 and an OH number from 50 to 250;

b) in a following step, a reaction is carried out of the product obtained in step a) with

ii) from 5 to 85 wt.% of at least one ethylenically monofunctional compound;

the sum of the amounts by weight of components (i) to (ii) being 100 wt.%;

followed by a reaction of the product obtained in step b) with a crosslinker.

5. Polymer microparticles which are dispersed in an aqueous phase and whose exterior is fully crosslinked, according to claim 3, **characterised in that** the ethylenically di- or multi-functional compound in steps a) and b) is the same.

6. Polymer microparticles which are dispersed in an aqueous phase and whose exterior is fully crosslinked, according to claim 3, **characterised in that** the ethylenically di- or multi-functional compound in steps a) and b) is different.

7. Polymer microparticles which are dispersed in an aqueous phase and whose exterior is fully crosslinked, according to any one of the preceding claims, **characterised in that** the ethylenically monofunctional compound in steps a) and b) is the same.

8. Polymer microparticles which are dispersed in an aqueous phase and whose exterior is fully crosslinked, according to any one of the preceding claims, **characterised in that** the ethylenically monofunctional compound in steps a) and b) is different.

9. Polymer microparticles which are dispersed in an aqueous phase and whose exterior is fully crosslinked, according to any one of the preceding claims, **characterised in that** the polymer selected from a polyester polyol, a polyurethane and/or a polyacrylate contains in the statistical mean at least one free carboxyl group originating from trimellitic acid or trimellitic anhydride per molecule.

**10.** Polymer microparticles which are dispersed in an aqueous phase and whose exterior is fully crosslinked, according to any one of the preceding claims, **characterised in that** the ethylenically monofunctional compound is selected from the group of the alkyl esters or hydroxyalkyl esters of acrylic or methacrylic acid.

**11.** Polymer microparticles which are dispersed in an aqueous phase and whose exterior is fully crosslinked, according to claim 10, **characterised in that** the ethylenically monofunctional compound is vinyl acetate, vinyltoluene, styrene, acrylamide or an alkyl (meth)acrylate or hydroxyalkyl (meth)acrylate having from 1 to 18 carbon atoms in the alkyl radical.

**12.** Polymer microparticles which are dispersed in an aqueous phase and whose exterior is fully crosslinked, according to claim 11, **characterised in that** the alkyl (meth)acrylate is selected from the group lauryl acrylate, isobornyl (meth)acrylate, cyclohexyl (meth)acrylate, tert-butylcyclohexyl (meth)acrylate, benzyl (meth)acrylate, glycidyl (meth)acrylate and trimethylcyclohexyl (meth)acrylate.

**13.** Polymer microparticles which are dispersed in an aqueous phase and whose exterior is fully crosslinked, according to claim 11, **characterised in that** the alkyl (meth)acrylate is selected from the group $\alpha$-ethylhexyl (meth)acrylate, methyl (meth)acrylate, n-butyl (meth)acrylate and tert-butyl (meth)acrylate.

**14.** Polymer microparticles which are dispersed in an aqueous phase and whose exterior is fully crosslinked, according to claim 11, **characterised in that** the hydroxyalkyl (meth)acrylate is selected from the group 2-hydroxyethyl (meth)acrylate, 2-hydroxypropyl (meth)acrylate, 2-hydroxybutyl (meth)acrylate, hexanediol 1,6-mono(meth)acrylate and 4-hydroxybutyl (meth)acrylate.

**15.** Polymer microparticles which are dispersed in an aqueous phase and whose exterior is fully crosslinked, according to any one of the preceding claims, **characterised in that** the ethylenically di- or multi-functional compound is selected from the group of the diacrylates, triacrylates and/or (meth)acrylic acid esters of polyfunctional alcohols.

**16.** Polymer microparticles which are dispersed in an aqueous phase and whose exterior is fully crosslinked, according to claim 15, **characterised in that** the ethylenically di- or multi-functional compound is allyl (meth)acrylate, hexanediol di(meth)acrylate, ethylene glycol di(meth)acrylate, neopentyl glycol di(meth)acrylate, butanediol di(meth)acrylate or trimethylolpropane tri(meth)acrylate.

**17.** Polymer microparticles which are dispersed in an aqueous phase and whose exterior is fully crosslinked, according to any one of the preceding claims, **characterised in that** the ethylenically monofunctional compound is partly a polyester or a polyurethane having an acid number less than 5, especially less than 3, which contains in the statistical mean up to one polymerisable double bond per molecule.

**18.** Polymer microparticles which are dispersed in an aqueous phase and whose exterior is fully crosslinked, according to any one of the preceding claims, **characterised in that** the ethylenically di- or multi-functional compound is partly a polyester or a polyurethane having an acid number less than 5, especially less than 3, which contains in the statistical mean at least 1.5 polymerisable double bonds per molecule.

**19.** Polymer microparticles which are dispersed in an aqueous phase and whose exterior is fully crosslinked, according to any one of the preceding claims, **characterised in that**

- the polyester polyol used in step a) during the polymerisation has a number-average molecular weight from 700 to 5000, particularly preferably from 750 to 2000; an acid number from 35 to 150, particularly preferably from 40 to 120; and an OH number from 150 to 300, particularly preferably from 220 to 280;
- the polyurethane used in step a) during the polymerisation has a number-average molecular weight from 700 to 5000, particularly preferably from 750 to 2500; an acid number from 30 to 120, particularly preferably from 40 to 80; and an OH number from 150 to 300, particularly preferably from 220 to 280; and/or
- the polyacrylate used in step a) during the polymerisation has a number-average molecular weight from 2500 to 20,000, particularly preferably from 4000 to 10,000; an acid number from 35 to 150, particularly preferably from 40 to 125; and an OH number from 100 to 250, particularly preferably from 150 to 200.

**20.** Polymer microparticles which are dispersed in an aqueous phase and whose exterior is fully crosslinked, according to any one of the preceding claims, **characterised in that** the polyester polyol used in step a) during the polymerisation does not contain a polymerisable double bond and is obtainable from the reaction of at least one polycarboxylic acid without a polymerisable double bond with at least one polyol without a polymerisable double bond.

21. Polymer microparticles which are dispersed in an aqueous phase and whose exterior is fully crosslinked, according to any one of claims 1 to 19, **characterised in that** the polyester polyol contains in the statistical mean at least one polymerisable double bond per molecule and is obtainable from the reaction of

> i) at least one polycarboxylic acid without a polymerisable double bond with at least one polyol having at least one polymerisable double bond;
> ii) at least one polycarboxylic acid having at least one polymerisable double bond with at least one polyol without a polymerisable double bond; or
> iii) at least one polycarboxylic acid having at least one polymerisable double bond with at least one polyol having at least one polymerisable double bond.

22. Polymer microparticles which are dispersed in an aqueous phase and whose exterior is fully crosslinked, according to claim 20 or 21, **characterised in that** the polycarboxylic acid without a polymerisable double bond is selected from the group

> • succinic acid, glutaric acid, adipic acid, azelaic acid, terephthalic acid, phthalic acid, isophthalic acid, endomethylenetetrahydrophthalic acid, 1,2-cyclohexanedicarboxylic acid, 1,3-cyclohexanedicarboxylic acid, 1,4-cyclohexanedicarboxylic acid, dodecanedioic acid, dodecanedicarboxylic acid;
> • dimeric and polymeric fatty acids, as well as trimellitic acid;

and the possible anhydrides thereof.

23. Polymer microparticles which are dispersed in an aqueous phase and whose exterior is fully crosslinked, according to any one of the preceding claims 20 to 22, **characterised in that** the polyol without a polymerisable double bond is selected from the group

> • ethylene glycol, diethylene glycol, triethylene glycol, tetraethylene glycol, hexaethylene glycol, 1,2-propylene glycol, 1,3-propylene glycol, 1,4-butanediol, 1,5-pentanediol, 1,6-hexanediol, 2,2-dimethylpropanediol, 2,2,4-trimethylpentanediol, 1,3-dimethylcyclohexane, 1,4-dimethylcyclohexane, hydroxypivalic acid neopentyl glycol monoester, dimethylolpropionic acid and perhydrogenated bisphenol A;
> • trimethylolpropane and glycerol; and
> • pentaerythritol, dipentaerythritol and di-(trimethylolpropane).

24. Polymer microparticles which are dispersed in an aqueous phase and whose exterior is fully crosslinked, according to any one of claims 21 to 23, **characterised in that** the polycarboxylic acid having at least one polymerisable double bond is selected from the group maleic acid, fumaric acid, itaconic acid, citraconic acid and aconitic acid and the possible anhydrides thereof.

25. Polymer microparticles which are dispersed in an aqueous phase and whose exterior is fully crosslinked, according to any one of claims 21 to 24, **characterised in that** the polyol having at least one polymerisable double bond is selected from the group

> • 1,4-butenediol, dimethylolpropionic acid allyl ester, dimethylolpropionic acid vinyl ester, trimethylolpropane monoallyl ether, glycerol monoallyl ether;
> • the addition products of allyl glycidyl ether or glycidyl (meth)acrylate with a polyester containing a carboxyl group; and
> • the addition products of allyl glycidyl ether or glycidyl (meth)acrylate with dimethylolpropionic acid.

26. Polymer microparticles which are dispersed in an aqueous phase and whose exterior is fully crosslinked, according to any one of claims 19 to 25, **characterised in that** the polyester polyol has been modified by at least one monocarboxylic acid selected from the group of the saturated or unsaturated, isolated or conjugated, linear or branched fatty acids, as well as benzoic acid or crotonic acid.

27. Polymer microparticles which are dispersed in an aqueous phase and whose exterior is fully crosslinked, according to claim 26, **characterised in that** the fatty acid contains from 5 to 22 carbon atoms and is especially linoleic acid, oleic acid, soybean fatty acid, isononanonic acid or isostearic acid.

28. Polymer microparticles which are dispersed in an aqueous phase and whose exterior is fully crosslinked, according to any one of the preceding claims, **characterised in that** the crosslinker is an aminoplastic resin or a polyisocyanate.

29. Polymer microparticles which are dispersed in an aqueous phase and whose exterior is fully crosslinked, according to claim 28, **characterised in that** the aminoplastic resin is a melamine resin.

30. Polymer microparticles which are dispersed in an aqueous phase and whose exterior is fully crosslinked, according to claim 28, **characterised in that** the polyisocyanate is selected from the group 1,3-bis(1-isocyanato-1-methylethyl)benzene (TMXDI, m-tetramethylxylylene diisocyanate), (4,4'-dicyclohexylmethane diisocyanate, Desmodur W), isophorone diisocyanate (IPDI, 3,5,5-trimethyl-1-isocyanato-3-isocyanatomethylcyclohexane) and 2,4,6-trioxo-1,3,5-tris(6-isocyanatohexyl)hexahydro-1,3,5-triazine (Desmodur N3300).

31. Polymer microparticles which are dispersed in an aqueous phase and whose exterior is fully crosslinked, according to claim 28 or 30, **characterised in that** the polyisocyanate has been modified hydrophilically.

32. Polymer microparticles which are dispersed in an aqueous phase and whose exterior is fully crosslinked, according to any one of the preceding claims, **characterised in that** the degree of neutralisation of the polyester polyol is from 30 to 100 %, especially from 50 to 80 %, during the entire preparation process.

33. Polymer microparticles which are dispersed in an aqueous phase and whose exterior is fully crosslinked, according to any one of the preceding claims, **characterised in that** the polymerisation according to step a) is carried out as an emulsion polymerisation using a nozzle-type jet disperser or a water jet emulsifier.

34. Polymer microparticles which are dispersed in an aqueous phase and whose exterior is fully crosslinked, according to any one of the preceding claims, **characterised in that** the polymerisation according to step a) is carried out as a redox polymerisation using ascorbic acid, iron(II) sulfate and at least one hydroperoxide.

35. Polymer microparticles which are dispersed in an aqueous phase and whose exterior is fully crosslinked, according to any one of the preceding claims, **characterised in that** they are converted into an anhydrous form.

36. Use of polymer microparticles dispersed in an aqueous phase according to any one of the preceding claims for aqueous or solvent-containing coating compositions.

37. Use according to claim 36 for aqueous or solvent-containing base lacquers, effect base lacquers or clear lacquers in the automotive industry.

38. Use according to claim 36 or 37 for aqueous or solvent-containing pigment preparations.

**Revendications**

1. Microparticules de polymère dispersées en phase aqueuse, dont l'extérieur est totalement réticulé, susceptibles d'être obtenues par un procédé de polymérisation à plusieurs étapes, dans lequel :

   (a) dans une première étape, on conduit une polymérisation en phase aqueuse d'un mélange de monomères formé de :

   (i) 7,5 à 93% en poids d'au moins un composé éthyléniquement monofonctionnel ;
   (ii) 0,3 à 47,5% en poids d'au moins un composé éthyléniquement di- ou multifonctionnel,

   en présence d'un polymère choisi parmi

   - un polyesterpolyol présentant une masse moléculaire moyenne en nombre de 500 à 10 000, un. indice d'acide entre 22 et 224 et un indice d'OH entre 60 et 400 ;
   - un polyuréthanne présentant une masse moléculaire moyenne en nombre de 500 à 20 000, un indice d'acide entre 25 et 150 et un indice d'OH entre 50 et 350, le polyuréthanne présentant en moyenne statistique par molécule au moins un groupe carboxyle libre issu d'un polyesterpolyol ; et/ou un polyacrylate présentant une masse moléculaire moyenne en nombre de 2000 à 100 000, un indice d'acide entre 25 et 300 et un indice d'OH entre 50 et 250 ;

(b) dans une étape suivante, on conduit une réaction du produit obtenu à l'étape (a) avec

(iii) 5 à 85% en poids d'au moins un composé éthyléniquement monofonctionnel ;

où la somme des fractions pondérales des composants (i) à (iii) s'élève à 100% en poids ;

suivie par une réaction du produit obtenu à l'étape (b) avec un réticulant.

2. Microparticules de polymère dispersées en phase aqueuse, dont l'extérieur est totalement réticulé, susceptibles d'être obtenues par un procédé de polymérisation en plusieurs étapes, dans lequel,

(a) dans une première étape, on conduit une polymérisation en phase aqueuse d'un mélange de monomères formé de :

(i) 15 à 95% en poids d'au moins un composé éthyléniquement monofonctionnel ;

en présence d'un polymère choisi parmi

- un polyesterpolyol présentant une masse moléculaire moyenne en nombre de 500 à 10 000, un indice d'acide entre 22 et 224 et un indice d'OH entre 60 et 400 ;
- un polyuréthanne présentant une masse moléculaire moyenne en nombre de 500 à 20 000, un indice d'acide entre 25 et 150 et un indice d'OH entre 50 et 350, le polyuréthanne présentant en moyenne statistique par molécule au moins un groupe carboxyle libre issu d'un polyesterpolyol ; et/ou
- un polyacrylate présentant une masse moléculaire moyenne en nombre de 2000 à 100 000, un indice d'acide entre 25 et 300 et un indice d'OH entre 50 et 250 ;

(b) dans une étape suivante, on conduit une réaction du produit obtenu à l'étape (a) avec

(ii) 2,5 à 83% en poids d'au moins un composé éthyléniquement monofonctionnel ;
(iii) 0,1 à 42,5% en poids d'au moins un composé éthyléniquement di- ou multifonctionnel,

la somme des fractions pondérales des composants (i) à (iii) s'élevant à 100% en poids ;

suivie par une réaction du produit obtenu à l'étape (b) avec un réticulant.

3. Microparticules de polymère dispersées en phase aqueuse, dont l'extérieur est totalement réticulé, susceptibles d'être obtenues par un procédé de polymérisation en plusieurs étapes, dans lequel,

(a) dans une première étape, on conduit une polymérisation en phase aqueuse d'un mélange de monomères formé de :

(i) 7,5 à 93% en poids d'au moins un composé éthyléniquement monofonctionnel ;
(ii) 0,3 à 47,5% en poids d'un composé éthyléniquement di- ou multifonctionnel ;

en présence d'un polymère choisi parmi

- un polyesterpolyol présentant une masse moléculaire moyenne en nombre de 500 à 10 000, un indice d'acide entre 22 et 224 et un indice d'OH entre 60 et 400 ;
- un polyuréthanne présentant une masse moléculaire moyenne en nombre de 500 à 20 000, un indice d'acide entre 25 et 150 et un indice d'OH entre 50 et 350, le polyuréthanne présentant en moyenne statistique par molécule au moins un groupe carboxyle libre issu d'un polyesterpolyol ; et/ou
- un polyacrylate présentant une masse moléculaire moyenne en nombre de 2000 à 100 000, un indice d'acide entre 25 et 300 et un indice d'OH entre 50 et 250 ;

(b) dans une étape suivante, on conduit une réaction du produit obtenu à l'étape (a) avec

(iii) 2,5 à 83% en poids d'au moins un composé éthyléniquement monofonctionnel ;

(iv) 0,1 à 42,5% en poids d'au moins un composé éthyléniquement di- ou multifonctionnel ;

la somme des fractions pondérales des composants (i) à (iv) s'élevant à 100% en poids ;

suivie par une réaction du produit obtenu à l'étape (b) avec un réticulant.

4. Microparticules de polymère dispersées en phase aqueuse, dont l'extérieur est totalement réticulé, susceptibles d'être obtenues par un procédé de polymérisation en plusieurs étapes, suivant lequel,

(a) dans une première étape, on conduit une polymérisation en phase aqueuse d'un mélange de monomères formé de :

(i) 15 à 95% en poids d'au moins un composé éthyléniquement monofonctionnel ;

en présence d'un polymère choisi parmi

- un polyesterpolyol présentant une masse moléculaire moyenne en nombre de 500 à 10 000, un indice d'acide entre 22 et 224 et un indice d'OH entre 60 et 400 ;
- un polyuréthanne présentant une masse moléculaire moyenne en nombre de 500 à 20 000, un indice d'acide entre 25 et 150 et un indice d'OH entre 50 et 350, le polyuréthanne présentant en moyenne statistique par molécule au moins un groupe carboxyle libre issu d'un polyesterpolyol ; et/ou
- un polyacrylate présentant une masse moléculaire moyenne en nombre de 2000 à 100 000, un indice d'acide entre 25 et 300 et un indice d'OH entre 50 et 250 ;

(b) dans une étape suivante, on conduit une réaction du produit obtenu à l'étape (a) avec

(ii) 5 à 85% en poids d'au moins un composé éthyléniquement monofonctionnel ;

la somme des fractions pondérales des composants (i) à (ii) s'élevant à 100% en poids ;

suivie par une réaction du produit obtenu à l'étape (b) avec un réticulant.

5. Microparticules de polymère dispersées en phase aqueuse, dont l'extérieur est totalement réticulé, selon la revendication 3, **caractérisées par le fait que** le composé éthyléniquement di- ou multifonctionnel est le même dans les étapes (a) et (b).

6. Microparticules de polymère dispersées en phase aqueuse, dont l'extérieur est totalement réticulé, selon la revendication 3, **caractérisées par le fait que** le composé éthyléniquement di- ou multifonctionnel est différent dans les étapes (a) et (b).

7. Microparticules de polymère dispersées en phase aqueuse, dont l'extérieur est totalement réticulé, selon l'une quelconque des revendications précédentes, **caractérisées par le fait que** le composé éthyléniquement monofonctionnel est différent dans les étapes (a) et (b).

8. Microparticules de polymère dispersées en phase aqueuse, dont l'extérieur est totalement réticulé, selon l'une quelconque des revendications précédentes, **caractérisées par le fait que** le composé éthyléniquement monofonctionnel est différent dans les étapes (a) et (b).

9. Microparticules de polymère dispersées en phase aqueuse, dont l'extérieur est totalement réticulé, selon l'une quelconque des revendications précédentes, **caractérisées par le fait que** le polymère choisi parmi un polyesterpolyol, un polyuréthanne et/ou un polyacrylate présente en moyenne statistique au moins un groupe carboxyle libre par molécule, qui est issu de l'acide trimellitique ou de l'anhydride de l'acide trimellitique.

10. Microparticules de polymère dispersées en phase aqueuse, dont l'extérieur est totalement réticulé, selon l'une quelconque des revendications précédentes, **caractérisées par le fait que** le composé éthyléniquement monofonctionnel est choisi dans le groupe des esters alkyliques ou des esters hydroxyalkyliques de l'acide acrylique ou de l'acide méthacrylique.

**11.** Microparticules de polymère dispersées en phase aqueuse, dont l'extérieur est totalement réticulé, selon la revendication 10, **caractérisées par le fait que** le composé éthyléniquement monofonctionnel est l'acétate de vinyle, le vinyltoluène, le styrène, l'acrylamide ou un (méth)acrylate d'alkyle ou (méth)acrylate d'hydroxyalkyle présentant 1 à 18 atomes de carbone dans le reste alkyle.

**12.** Microparticules de polymère dispersées en phase aqueuse, dont l'extérieur est totalement réticulé, selon la revendication 11, **caractérisées par le fait que** le (méth)acrylate d'alkyle est choisi dans le groupe constitué par l'acrylate de lauryle, le (méth)acrylate d'isobornyle, le (méth)acrylate de cyclohexyle, le (méth)acrylate de tert.-butylcyclohexyle, le (méth)acrylate de benzyle, le (méth)acrylate de glycidyle et le (méth)acrylate de triméthylcyclohexyle.

**13.** Microparticules de polymère dispersées en phase aqueuse, dont l'extérieur est totalement réticulé, selon la revendication 11, **caractérisées par le fait que** le (méth)acrylate d'alkyle est choisi dans le groupe constitué par le (méth)acrylate d'$\alpha$-éthylhexyle, le (méth)acrylate de méthyle, le (méth)acrylate de n-butyle et le (méth)acrylate de tert.-butyle.

**14.** Microparticules de polymère dispersées en phase aqueuse, dont l'extérieur est totalement réticulé, selon la revendication 11, **caractérisées par le fait que** le (méth)acrylate d'hydroxyalkyle est choisi dans le groupe constitué par le (méth)acrylate de 2-hydroxyéthyle, le (méth)acrylate de 2-hydroxypropyle, le (méth)acrylate de 2-hydroxybutyle, le mono-(méth)acrylate d'hexanediol-1,6 et le (méth)acrylate de 4-hydroxybutyle.

**15.** Microparticules de polymère dispersées en phase aqueuse, dont l'extérieur est totalement réticulé, selon l'une quelconque des revendications précédentes, **caractérisées par le fait que** le composé éthyléniquement di- ou multifonctionnel est choisi dans le groupe constitué par les diacrylates, triacrylates et/ou esters de l'acide (méth) acrylique et d'alcools polyfonctionnels.

**16.** Microparticules de polymère dispersées en phase aqueuse, dont l'extérieur est totalement réticulé, selon la revendication 15, **caractérisées par le fait que** le le composé éthyléniquement di- ou multifonctionnel est le (méth) acrylate d'allyle, le di(méth)acrylate d'hexanediol, le di(méth)acrylate d'éthylèneglycol, le di(méth)acrylate de néopentylglycol, le di(méth)acrylate de butanediol ou le tri(méth)acrylate de triméthylolpropane.

**17.** Microparticules de polymère dispersées en phase aqueuse, dont l'extérieur est totalement réticulé, selon l'une quelconque des revendications précédentes, **caractérisées par le fait que** le composé éthyléniquement monofonctionnel est en partie un polyester ou un polyuréthane présentant un indice d'acide de moins de 5, en particulier de moins de 3, qui en moyenne statistique contient jusqu'à une double liaison polymérisable par molécule.

**18.** Microparticules de polymère dispersées en phase aqueuse, dont l'extérieur est totalement réticulé, selon l'une quelconque des revendications précédentes, **caractérisées par le fait que** le composé éthyléniquement di- ou multifonctionnel est en partie un polyester ou un polyuréthanne présentant un indice d'acide de moins de 5, en particulier de moins de 3, qui contient en moyenne statistique au moins 1,5 double liaison polymérisable par molécule.

**19.** Microparticules de polymère dispersées en phase aqueuse, dont l'extérieur est totalement réticulé, selon l'une quelconque des revendications précédentes, **caractérisées par le fait que**

- le polyesterpolyol utilisé à l'étape (a) pendant la polymérisation a une masse moléculaire moyenne en nombre entre 700 et 5 000, de façon particulièrement préférée entre 750 et 2000 ; un acide d'acide entre 35 et 150, de façon particulièrement préférée entre 40 et 120 ; et un indice d'OH entre 150 et 300, de façon particulièrement préférée entre 220 et 280 ;
- le polyuréthanne utilisé à l'étape (a) pendant la polymérisation a une masse moléculaire moyenne en nombre entre 700 et 5000, de façon particulièrement préférée entre 750 et 2500 ; un acide d'acide entre 30 et 120, de façon particulièrement préférée entre 40 et 80 ; et un indice d'OH entre 150 et 300, de façon particulièrement préférée entre 220 et 280 ; et/ou
- le polyacrylate utilisé à l'étape (a) pendant la polymérisation a une masse moléculaire moyenne en nombre en 2500 et 20 000, de façon particulièrement préférée entre 4000 et 10 000 ; un acide d'acide entre 35 et 150, de façon particulièrement préférée entre 40 et 125 ; et un indice d'OH entre 150 et 250, de façon particulièrement préférée entre 150 et 200.

**20.** Microparticules de polymère dispersées en phase aqueuse, dont l'extérieur est totalement réticulé, selon l'une quelconque des revendications précédentes, **caractérisées par le fait que** le polyesterpolyol utilisé à l'étape (a) pendant la polymérisation ne présente pas de double liaison polymérisable et est susceptible d'être obtenu par la réaction d'au moins un acide polycarboxylique sans double liaison polymérisable avec au moins un polyol sans double liaison polymérisable.

**21.** Microparticules de polymère dispersées en phase aqueuse, dont l'extérieur est totalement réticulé, selon l'une quelconque des revendications 1 à 19, **caractérisées par le fait que** le polyesterpolyol présente en moyenne statistique au moins une double liaison polymérisable par molécule et est susceptible d'être obtenu par la réaction de :

(i) au moins un acide polycarboxylique sans double liaison polymérisable avec au moins un polyol présentant au moins une double liaison polymérisable ;

(ii) au moins un acide polycarboxylique présentant au moins une double liaison polymérisable avec au moins un polyol sans double liaison polymérisable ; ou

(iii) au moins un acide polycarboxylique présentant au moins une double liaison polymérisable avec au moins un polyol présentant au moins une double liaison polymérisable.

**22.** Microparticules de polymère dispersées en phase aqueuse, dont l'extérieur est totalement réticulé, selon l'une des revendications 20 ou 21, **caractérisées par le fait que** l'acide polycarboxylique sans double liaison polymérisable est choisi dans le groupe constitué par :

- l'acide succinique, l'acide glutarique, l'acide adipique, l'acide azélaïque, l'acide téréphtalique, l'acide phtalique, l'acide isophtalique, l'acide endométhylènetétrahydrophtalique, l'acide 1,2-cyclohexanedicarboxylique, l'acide 1,3-cylohexanedicarboxylique, l'acide 1,4-cyclohexanedicarboxylique, le dodécanediacide, l'acide dodécanedicarboxylique ;
- les acides gras dimères et polymères ainsi que l'acide trimellitique ;

ainsi que les anhydrides possibles de ceux-ci.

**23.** Microparticules de polymère dispersées en phase aqueuse, dont l'extérieur est totalement réticulé, selon l'une quelconque des revendications 20 à 22 précédentes, **caractérisées par le fait que** le polyol sans double liaison polymérisable est choisi dans le groupe constitué par :

- l'éthylèneglycol, le diéthylèneglycol, le triéthylèneglycol, le tétraéthylèneglycol, l'hexaéthylèneglycol, le 1,2-propylèneglycol, le 1,3-propylèneglycol, le 1,4-butanediol, le 1,5-pentanediol, le 1,6-hexanediol, le 2,2-diméthylpropanediol, le 2,2,4-triméthylpentanediol, le 1,3-diméthylolcyclohexane, le 1,4-diméthylolcyclohexane, le monoester de l'acide hydroxypivalique et du néopentylglycol, l'acide diméthylolpropionique et le bisphénol A perhydrogéné ;
- le triméthylolpropane et le glycérol ; ainsi que
- le pentaérythritol, le dipentaérythritol et le di(triméthylolpropane).

**24.** Microparticules de polymère dispersées en phase aqueuse, dont l'extérieur est totalement réticulé, selon l'une quelconque des revendications 21 à 23, **caractérisées par le fait que** l'acide polycarboxylique présentant au moins une double liaison polymérisable est choisi dans le groupe constitué par l'acide maléique, l'acide fumarique, l'acide icatonique, l'acide citraconique et l'acide aconitique ainsi que les anhydrides possibles de ceux-ci.

**25.** Microparticules de polymère dispersées en phase aqueuse, dont l'extérieur est totalement réticulé, selon l'une quelconque des revendications 21 à 24, **caractérisées par le fait que** le polyol présentant au moins une double liaison polymérisable est choisi dans le groupe constitué par :

- le 1,4-butènediol, l'ester allylique de l'acide diméthylolpropionique, l'ester vinylique de l'acide diméthylolpropionique, l'éther monoallylique du triméthylolpropane, l'éther monoallylique du glycérol ;
- les produits d'addition de l'allyl glycidyl éther ou du (métha)crylate de glycidyle sur un polyester présentant un groupe carboxyle ; ainsi que
- les produits d'addition de l'allyl glycidyl éther ou du (méth)acrylate de glycidyle sur l'acide diméthylolpropionique.

**26.** Microparticules de polymère dispersées en phase aqueuse, dont l'extérieur est totalement réticulé, selon l'une quelconque des revendications 19 à 25, **caractérisées par le fait que** le polyester polyol est modifié par au moins un acide monocarboxylique, choisi dans le groupe des acides gras saturés ou insaturés, isolés ou conjugués, linéaires ou ramifiés, ainsi que l'acide benzoïque ou l'acide crotonique.

**27.** Microparticules de polymère dispersées en phase aqueuse, dont l'extérieur est totalement réticulé, selon la revendication. 26, **caractérisées par le fait que** l'acide gras présente 5 à 22 atomes de carbone, et en particulier l'acide linoléique, l'acide oléique, l'acide gras de soja, l'acide isononanoïque ou l'acide isostéarique.

**28.** Microparticules de polymère dispersées en phase aqueuse, dont l'extérieur est totalement réticulé, selon l'une quelconque des revendications précédentes, caractérisées le fait que le réticulant est une résine aminoplaste ou un polyisocyanate.

**29.** Microparticules de polymère dispersées en phase aqueuse, dont l'extérieur est totalement réticulé, selon la revendication 28, **caractérisées par le fait que** la résine aminoplaste est une résine de mélamine.

**30.** Microparticules de polymère dispersées en phase aqueuse, dont l'extérieur est totalement réticulé, selon la revendication 28, **caractérisées par le fait que** le polyisocyanate est choisi dans le groupe constitué par le 1,3-bis (1-isocyanato-1-méthyléthyl)benzène (TMXDI, m-tétraméthylxylylènediisocyanate), (4,4'-dicyclohexylméthanediisocyanate, Desmodur W), l'isophoronediisocyanate (IPDI, 3,5,5-triméthyl-1-isocyanato-3-isocyanatométhylcyclohexane) et le 2,4,6-trioxo-1,3,5-tris(6-isocyanatohexyl)hexahydro-1,3,5-triazine (Desmodur N3300).

**31.** Microparticules de polymère dispersées en phase aqueuse, dont l'extérieur est totalement réticulé, selon l'une des revendications 28 ou 30, **caractérisées par le fait que** le polyisocyanate est modifié hydrophile.

**32.** Microparticules de polymère dispersées en phase aqueuse, dont l'extérieur est totalement réticulé, selon l'une quelconque des revendications précédentes, caractérisées le fait que le degré de neutralisation du polyesterpolyol pendant tout le procédé de fabrication se situe entre 30 et 100%, en particulier entre 50 et 80%.

**33.** Microparticules de polymère dispersées en phase aqueuse, dont l'extérieur est totalement réticulé, selon l'une quelconque des revendications précédentes, caractérisées le fait que la polymérisation correspondant à l'étape (a) est conduite comme polymérisation en émulsion avec utilisation d'un dispositif de dispersion à jet d'air ou d'un dispositif d'émulsification à jet d'eau.

**34.** Microparticules de polymère dispersées en phase aqueuse, dont l'extérieur est totalement réticulé, selon l'une quelconque des revendications précédentes, **caractérisées par le fait que** la polymérisation correspondant à l'étape (a) est réalisée comme polymérisation redox avec utilisation de l'acide ascorbique, du sulfate de fer (II) et d'au moins un hydroperoxyde.

**35.** Microparticules de polymère dispersées en phase aqueuse, dont l'extérieur est totalement réticulé, selon l'une quelconque des revendications précédentes, **caractérisées par le fait qu'**il est transformé en une forme anhydre.

**36.** Utilisation de microparticules de polymère dispersées en phase aqueuse, telles que définies à l'une quelconque des revendications précédentes pour des compositions de revêtement aqueuses ou à teneur en solvant.

**37.** Utilisation selon la revendication 36 pour des laques de base, des laques de base à effet ou des laques transparentes, aqueuses ou à teneur en solvant, dans l'industrie automobile.

**38.** Utilisation selon l'une des revendications 36 ou 37 pour des préparations pigmentaires aqueuses ou à teneur en solvant.